# EUROPEAN PATENT SPECIFICATION

(11) **EP 4 071 860 B1**
(45) Date of publication and mention of the grant of the patent: **25.11.2026**
(21) Application number: 20957153.8
(22) Date of filing: 15.10.2020
(51) Int. Cl.: C01B 32/21, C01B 32/205, H01M 4/04, H01M 4/587, H01M 4/133, H01M 4/36, H01M 4/583, H01M 4/62, H01M 4/1393, H01M 10/0525

(54) **NEGATIVE ELECTRODE ACTIVE MATERIAL, PREPARATION METHOD THEREFOR, SECONDARY BATTERY, BATTERY MODULE COMPRISING SECONDARY BATTERY, BATTERY PACK, AND DEVICE**
NEGATIVELEKTRODENAKTIVMATERIAL, HERSTELLUNGSVERFAHREN DAFÜR, SEKUNDÄRBATTERIE, BATTERIEMODUL MIT SEKUNDÄRBATTERIE, BATTERIEPACK UND VORRICHTUNG
MATÉRIAU ACTIF D'ÉLECTRODE NÉGATIVE, SON PROCÉDÉ DE PRÉPARATION, BATTERIE SECONDAIRE, MODULE DE BATTERIE COMPRENANT UNE BATTERIE SECONDAIRE, BLOC-BATTERIE ET DISPOSITIF

(43) Date of publication of application: 12.10.2022
(60) Divisional application: 26159939.3 / 4 725 901; 26213581.7
(73) Proprietor: Contemporary Amperex Technology (Hong Kong) Limited, Central, Hong Kong (HK)
(72) Inventor: ZENG, Yuqun, Ningde, Fujian 352100 (CN); DENG, Baida, Ningde, Fujian 352100 (CN); KANG, Meng, Ningde, Fujian 352100 (CN); LI, Erling, Ningde, Fujian 352100 (CN); HE, Libing, Ningde, Fujian 352100 (CN)
(74) Representative: Rowlands, Stuart Michael
(86) International application number: PCT/CN2020/121268
(87) International publication number: WO 2022/077374

(56) References cited:
- WO-A1-2010/110441
- WO-A1-2015/190833
- WO-A1-2020/187106
- CN-A- 102 227 020
- CN-A- 108 155 351
- CN-A- 109 841 831
- CN-A- 110 767 888
- CN-A- 110 767 888
- CN-A- 111 554 898
- JP-A- 2012 216 532
- KR-A- 20180 070 302
- KR-B1- 101 708 360
- US-A1- 2018 241 038

## Description

### TECHNICAL FIELD

This application relates to the field of secondary battery technologies, and in particular, to a negative-electrode active material and a preparation method thereof, a secondary battery, and a battery module, a battery pack, and an apparatus that include such secondary battery.

### BACKGROUND

Secondary batteries are charged and discharged through repeated intercalation and deintercalation of active ions between a positive electrode and a negative electrode, featuring outstanding features such as high energy density, long cycle life, no pollution, and no memory effect. Therefore, as clean energy, the secondary batteries have been gradually popularized from electronic products to large-scale apparatuses such as electric vehicles to adapt to sustainable development strategies of environment and energy.

However, compared with conventional oil-fueled vehicles that can be refueled quickly in a timely manner, the electric vehicles are generally charged at a smaller rate, often requiring a longer charging time. This causes range anxiety for consumers and limits rapid popularization of the electric vehicles. Therefore, in order to improve market competitiveness of the electric vehicles, it is necessary to provide secondary batteries with good fast-charging performance.

US2018241038A1 provides a negative electrode for a lithium ion secondary battery including a current collector and a negative electrode active material layer on the current collector, wherein the negative electrode active material layer includes: a first composite particle with a first graphite core particle and a first non-graphite-based carbon material coating a surface thereof; and a second composite particle with a second graphite core particle and a second non-graphite-based carbon material coating a surface thereof, and wherein an average particle diameter of the first composite particles is 5-30 µm; an average particle diameter of the second composite particles is 2-25 µm, and is smaller than the average particle diameter of the first composite particles; the mixing ratio of the first composite particle A and the second composite particle B is 50:50-95:5 in mass ratio; and a density of the negative electrode active material layer is 1.4-1.7 g/cm3.

KR101708360B1 provides a negative electrode active material that includes a primary particle having a crystalline carbon-based core with silicon-based nanowires disposed on its surface, coated with an amorphous carbon-based coating layer such that at least a portion of said silicon-based nanowires are not exposed, thereby controlling the swelling rate and imparting conductivity to improve the charge/discharge efficiency and cycle life characteristics of the lithium battery.

WO2015190833A1 relates to a negative electrode active material and a method for preparing the same, the negative electrode active material comprising: low-crystalline artificial graphite; and an amorphous carbon coating layer formed on the low-crystalline artificial graphite, wherein the spacing d002 of (002) plane at the XRD measurement is 0.338 nm to 0.3396 nm. The use of the negative electrode active material of the present invention in a lithium secondary battery can form a more stable SEI layer at the time of reaction with an electrolyte, and thus can improve the initial efficiency and reversible capacity of the lithium secondary battery.

WO2010110441A1 discloses a mixed carbon material for use in an electrode of a non-aqueous secondary battery showing excellent characteristics having rapid charge-discharge characteristics and high cycle characteristics. More particularly, disclosed is a negative electrode material for non-aqueous electrolyte secondary battery comprising the following carbon material A and carbon material B: (carbon material A) a multilayer-structured carbon material which contains graphite particles and amorphous carbon covering the surfaces of the particles, and in which a 002 plane spacing (d002) measured by X-ray wide angle diffraction is 3.37 ? or less, Lc is 900 ? or more, a tap density is 0.8 g/cm3 or more, and a Raman R value, which is the ratio of a peak intensity at around 1360 cm-1 to a peak intensity at around 1580 cm-1 in an argon ion laser Raman spectrum, is 0.25 to 0.6; and (carbon material B) graphite particles in which a 002 plane spacing (d002) measured by X-ray wide angle diffraction is 3.37 ? or less, Lc is 900 ? or more, a tap density is 0.8 g/cm3 or more, a Raman R value, which is the ratio of a peak intensity at around 1360 cm-1 to a peak intensity at around 1580 cm-1 in an argon ion laser Raman spectrum, is 0.2 to 0.5, and an average circularity measured by a flow-type particle analyzer is 0.9 or more.

JP2012216532A provides a negative electrode material for a nonaqueous secondary battery employs a mixed carbon material containing the following carbon materials A and B. (Carbon material A) Graphite having an aspect ratio of 5 or lower, the aspect ratio being a ratio of the length of the major diameter of a particle with respect to that of the minor diameter thereof. (Carbon material B) Scale-like graphite having an aspect ratio of 6 or higher, the aspect ratio being a ratio of the length of the major diameter of a particle with respect to that of the minor diameter thereof, and an 80% particle size (d80) which is 1.7 times or more of the average particle size (d50) of the carbon material A.

WO2020187106A1 provides an anode material, an anode and an electrochemical device comprising the anode material. The anode material meets the following relationship equations: 0.8≤0.06 × (Dv50) 2-2.5 × Dv50+Dv99≤ 12 (1); and 1.2≤0.2 × Dv50-0.006 × (Dv50) 2+BET≤5 (2), wherein Dv50 represents a value in the volume-based particle size distribution of the anode material that is greater than the particle size of 50% of the particles, Dv99 represents a value in the volume-based particle size distribution of the anode material that is greater than the particle size of 99% of the particles, and BET is a specific surface area of the anode material, wherein Dv50 and Dv99 are expressed in µm and BET is expressed in m 2/g. The anode material is capable of significantly improving the rate performance of electrochemical devices.

CN110767888A relates to the technical field of lithium battery production, in particular to a lithium battery negative electrode material and a preparation method thereof. The invention discloses a lithium battery negative electrode material and a preparation method thereof. The lithium battery negative electrode material comprises a carbon element material, a conductive agent, a binder, an aqueous solution and a coating material. The carbon element material comprises crystalline flake graphite, coke and mesocarbon microbeads, and the proportion of the carbon element material in the lithium battery negative electrode material is 93%-96%. A mixed product of butadiene styrene rubber coated artificial graphite and natural graphite is adopted, so that the negative electrode of the battery hasthe characteristics of high discharge capacity and long cycle life, the problem of expansion of the battery in a high-temperature process is solved, the probability of explosion of the battery in useis further reduced, and the use safety of the battery is improved.

### SUMMARY

The invention is defined by the appended claims. In the following, apparatus and/or methods referred to as embodiments that nevertheless do not fall within the scope of the claims should be understood as examples useful for understanding the invention.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.
FIG. 1 is a scanning electron microscope (SEM) image of a negative-electrode active material at a magnification of 1000 times according to an embodiment of this application.
FIG. 2 is a scanning electron microscope (SEM) image of a negative-electrode active material at a magnification of 5000 times according to another embodiment of this application.
FIG. 3 is an ion polishing cross-sectional topography (CP) image of a negative-electrode plate at a magnification of 5000 times after a negative-electrode active material of this application is made into the negative-electrode plate.
FIG. 4 is a transmission electron microscope (TEM) image of a negative-electrode active material at a magnification of 60000 times according to an embodiment of this application.
FIG. 5 is a schematic diagram of a secondary battery according to an embodiment.
FIG. 6 is an exploded view of FIG. 5.
FIG. 7 is a schematic diagram of a battery module according to an embodiment.
FIG. 8 is a schematic diagram of a battery pack according to an embodiment.
FIG. 9 is an exploded view of FIG. 8.
FIG. 10 is a schematic diagram of an apparatus using a secondary battery as a power source according to an embodiment.

### DETAILED DESCRIPTION OF EMBODIMENTS

In order to make the objectives, technical solutions and beneficial technical effects of this application clearer, the following further describes this application in detail with reference to the embodiments. It should be understood that the embodiments described in this specification are merely intended to interpret this application, but not intended to limit this application.

For simplicity, only some numerical ranges are expressly disclosed in this specification. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, although not expressly recorded, each point or individual value between endpoints of a range is included in the range. Therefore, each point or individual value may act as its own lower limit or upper limit to be combined with any other point or individual value or combined with any other lower limit or upper limit to form a range not expressly recorded.

In the description of this specification, it should be noted that, unless otherwise stated, "above" and "below" means inclusion of the number itself, and "more" in "one or more" means at least two.

In the description of this specification, unless otherwise stated, the term "or" indicates inclusion. For example, a phrase "A or B" means "A, B, or both A and B". More specifically, any one of the following conditions satisfies the condition "A or B": A is true (or present) and B is false (or not present); A is false (or not present) and B is true (or present); or both A and B are true (or present).

The foregoing invention content of this application is not intended to describe each of the disclosed embodiments or implementations of this application. The following description illustrates exemplary embodiments in more detail by using examples. Throughout this application, guidance is provided by using a series of embodiments and the embodiments may be used in various combinations. In each instance, enumeration is only representative but should not be interpreted as exhaustive.

A secondary battery, also referred to as a rechargeable battery or a storage battery, is a battery that can be charged after being discharged to activate active materials for continuous use.

Generally, a secondary battery includes a positive-electrode plate, a negative-electrode plate, a separator, and an electrolyte. During charging and discharging of the battery, active ions (for example, lithium ions) are intercalated and deintercalated back and forth between the positive-electrode plate and the negative-electrode plate. The separator is provided between the positive-electrode plate and the negative-electrode plate, mainly plays a role of preventing short-circuits of the positive and negative electrodes, and allows ions to pass through. The electrolyte is between the positive-electrode plate and the negative-electrode plate, and mainly plays a role of conducting ions.

The inventor has found that a key to improving the fast-charging capability of the secondary battery is to improve kinetic performance of the negative electrode. The negative-electrode plate generally includes a negative-electrode current collector and a negative-electrode film layer, and the negative-electrode film layer includes a negative-electrode active material. The negative-electrode active material is usually a material that participates in intercalation and deintercalation of active ions in the negative-electrode plate during charging and discharging of the battery. At present, in order to improve kinetic performance of the battery, most methods are intended to reduce a thickness of the negative-electrode film layer or reduce a compacted density of the negative-electrode film layer. However, it has been proved through a lot of research that in the foregoing methods for improving battery kinetics, only kinetics of the battery actually in a low SOC state (that is, in an initial charging phase) are improved to some extent while improvement on kinetic performance of the battery actually in a high SOC state (that is, in a later charging phase) is relatively slight. Therefore, the fast-charging capability of the secondary battery cannot be effectively improved. In addition, the energy density of the battery is also significantly decreased.

In the preparation process of the negative-electrode active material, the industry usually pays attention to a volume-based median particle size Dᵥ50 thereof. However, because the number of particles with a cumulative volume distribution percentage of above 99% in terms of small particles is very small, Dᵥ99 of the negative-electrode active material has been considered unimportant and neglected by the industry. However, the inventor has surprisingly found during in-depth research that when Dᵥ99 of the negative-electrode active material is controlled within a specific range, a fast intercalation capability of the negative-electrode active material in a high lithium intercalation state (corresponding to the high SOC state of the battery) can be significantly improved. Therefore, the foregoing bottleneck can be broken, and the fast-charging capability of the secondary battery in the high SOC state can be improved.

To this end, this application provides a negative-electrode active material, which includes a core and a coating layer covering at least part of a surface of the core, where the core includes artificial graphite, the coating layer includes amorphous carbon, a volume-based particle size distribution of the negative-electrode active material satisfies Dᵥ99 ≤ 24µm, and a volume-based median particle size Dᵥ50 satisfies 8µm ≤ Dᵥ50 ≤ 15µm.

The inventor has found through a lot of research that, when the negative-electrode active material of this application is used, the battery can have higher active ion solid-phase diffusion performance under the premise of higher energy density. Even in the high lithium intercalation state during the later charging phase (in the high SOC state), particles of the negative-electrode active material can still maintain good electrochemical reactivity, and active ions can be quickly intercalated into bulk of the negative-electrode active material and migrate rapidly, thereby effectively improving a diffusion speed of the active ions in the negative-electrode plate and also reducing ohmic and concentration polarization. In this way, an overall charging speed and charging depth of the negative-electrode plate are greatly increased. Therefore, in this application, high-rate charging of the battery in all SOC states can be implemented, significantly improving the fast-charging capability. In addition, migration performance of active ions between the positive and negative electrodes in the battery is relatively good and features relatively low polarization, significantly improving the cycling performance. Generally, the low SOC state means being below 30% SOC, and the high SOC state means being above 60% SOC.

The artificial graphite described in this application is usually a graphite material obtained through graphitization at a high temperature, and has a relatively high graphitization and crystallization degree.

The amorphous carbon described in this application is typically a carbon material with a lower graphitization and crystallization degree.

Generally, a lattice structure of the artificial graphite tends to be a layered arrangement in a long-range ordered manner; and a lattice structure of the amorphous carbon tends to be disordered. The lattice arrangement can be usually observed by using transmission electron microscopy (TEM) images.

In some implementations, a shape of the core may be one or more of a block, a sheet, and an approximate sphere.

In some implementations, a thickness of the coating layer is ≥ 2nm, optionally, 2nm-20nm; for example, 2nm-15nm, 2nm-10nm, or Snm-10nm.

In some implementations, a coverage of the coating layer on a surface of the core is ≥ 50%, optionally, 60%-100%.

In some implementations, the negative-electrode active material may satisfy Dᵥ99 ≤ 23.8µm, ≤ 23.5µm, ≤ 23µm, ≤ 22.5µm, ≤ 22µm, ≤ 21µm, or ≤ 20µm.

In some implementations, the negative-electrode active material can satisfy Dᵥ99 ≥15µm, ≥16µm, ≥17µm, ≥18µm, or ≥19µm.

In some implementations, the negative-electrode active material may satisfy: 15µm ≤ Dᵥ99 ≤ 24µm; for example, 16µm ≤ Dᵥ99 ≤ 22µm, 17µm ≤ Dᵥ99 ≤ 24µm, 17µm ≤ Dᵥ99 ≤ 23µm, 15µm ≤ Dᵥ99 ≤ 21µm, 18µm ≤ Dᵥ99 ≤ 21µm, 19µm ≤ Dᵥ99 ≤ 21µm, 19µm ≤ Dᵥ99 ≤ 22µm, 19µm ≤ Dᵥ99 ≤ 23µm, 20µm ≤ Dᵥ99 ≤ 22µm, 20µm ≤ Dᵥ99 ≤ 21.5µm, or 20µm ≤ Dᵥ99 ≤ 21µm.

The negative-electrode active material with Dᵥ99 being within an appropriate range can further improve a solid-phase diffusion speed of active ions of the negative electrode in a high lithium intercalation state and reduce polarization. This further helps reduce relatively small particles therein, and more active ions can be intercalated into the particles. In addition, a smooth pore channel structure is formed in the negative-electrode film layer, and a liquid phase conduction path is shortened, thereby further improving the fast-charging capability and cycling performance of the battery. The negative-electrode active material with Dᵥ99 being within an appropriate range enables the secondary battery to have both higher fast-charging capability and better cycling performance.

In some implementations, the negative-electrode active material can satisfy Dᵥ50 ≤ 14µm, ≤ 13µm, or ≤ 12µm. Optionally, the Dᵥ50 of the negative-electrode active material is ≥8µm, ≥9µm, ≥10µm, or ≥11µm. For example, the negative-electrode active material may satisfy 8µm ≤ Dᵥ50 ≤ 14µm, 9µm ≤ Dᵥ50 ≤ 13µm, 10µm ≤ Dᵥ50 ≤ 14µm, 12µm ≤ Dᵥ50 ≤ 14µm, 12µm ≤ Dᵥ50 ≤ 13µm, or 11µm ≤ Dᵥ50 ≤ 13µm.

The negative-electrode active material with Dᵥ50 being within an appropriate range can further shorten a migration path of active ions in particles of the negative-electrode active material, and helps form a smooth pore structure in the negative-electrode film layer. In this way, the negative-electrode plate has a good solid-phase diffusion speed of active ions and good liquid-phase transmission performance, thereby further improving the fast-charging capability of the battery. In addition, with the negative-electrode active material with Dᵥ50 being within an appropriate range, it can be further ensured that the negative-electrode active material has a higher gram capacity, so that the battery obtains a higher energy density and side reaction of the electrolyte in the negative electrode can be further reduced, thereby improving the cycling performance of the battery.

In some implementations, a particle size uniformity (Uniformity) of the negative-electrode active material is 0.25-0.45, for example, may be 0.28-0.4, 0.32-0.4, 0.32-0.38, 0.30-0.36, 0.31-0.35, or 0.32-0.36. The particle size uniformity (Uniformity) of the negative-electrode active material may characterize a dispersion degree by which the particle size of all particles of the negative-electrode active material deviates from the volume-based median particle size Dᵥ50 of the negative-electrode active material, which reflects uniformity of particle size distribution of the negative-electrode active material. When the particle size uniformity (Uniformity) of the negative-electrode active material is within the foregoing range, a relatively short liquid-phase transmission path is likely to be formed in the negative-electrode film layer, and a large contact area is present between the particles. This is good for electron conduction and active ion transmission in the negative-electrode plate, further improving the fast-charging capability of the battery. In addition, close contact between the particles of the negative-electrode film layer can be implemented, and the negative-electrode plate can have a higher compacted density, thereby improving the energy density of the battery.

In some implementations, the negative-electrode active material satisfies: 0.6 ≤ (Dᵥ90-Dᵥ10)/Dᵥ50 ≤ 1.8. For example, (Dᵥ90-Dᵥ10)/Dᵥ50 of the negative-electrode active material is 0.8 to 1.4, 0.9 to 1.3, 1.0 to 1.25, or 1.2 to 1.6. (Dᵥ90-Dᵥ10)/Dᵥ50 of the negative-electrode active material reflects a degree by which the particle size of larger particles and the particle size of smaller particles deviate from the volume-based median particle size Dᵥ50 in the negative-electrode active material. The negative-electrode active material with (Dᵥ90-Dᵥ10)/Dᵥ50 being within an appropriate range helps improve processing performance of a negative-electrode slurry and the negative-electrode film layer, so that the negative-electrode film layer has relatively high particle distribution uniformity. In this way, different areas of the negative-electrode film layer all exhibit relatively high active ion transmission performance, and the fast-charging capability of the battery is further improved.

In some implementations, the volume-based particle size distribution Dᵥ90 of the negative-electrode active material is 13µm-18µm, for example, may be 13µm-16µm, 14µm-17µm, or 15µm-18µm. The negative-electrode active material with Dᵥ90 being within an appropriate range can further improve the solid-phase diffusion speed of active ions in the negative-electrode film layer, thereby further improving the fast-charging capability of the battery. In addition, the negative-electrode active material can further have a relatively high gram capacity, which helps increase the energy density of the battery.

In some implementations, the volume-based particle size distribution Dᵥ10 of the negative-electrode active material is 5µm-10µm, for example, may be 6µm-8µm. The content of small particles in the negative-electrode active material is small, which can reduce side reaction between the electrolyte and the material, and improve the cycling performance and storage performance of the battery.

**In** some implementations, a particle size specific surface area of the negative-electrode active material is 0.4m²/g-0.75m²/g, for example, may be 0.4m²/g-0.7m²/g, 0.42m²/g-0.68m²/g, 0.46m²/g-0.55m²/g, 0.5m²/g-0.68m²/g, or 0.5m²/g-0.65m²/g.

It should be noted that the "particle size specific surface area" of the negative-electrode active material of this application is not the same as a conventional "specific surface area" of the negative-electrode active material. At present, the specific surface area (SSA) of the negative-electrode active material in the industry is mostly obtained by using a gas adsorption BET method, and is merely used to characterize a physical adsorption specific surface area of the negative-electrode active material. The "particle size specific surface area" of the negative-electrode active material in this application is obtained by using a laser diffraction particle size analysis method, and may be used to characterize a degree by which a profile of the negative-electrode active material deviates from a sphere.

The inventor has found that the negative-electrode active material with the particle size specific surface area being within an appropriate range can increase ion deintercalation channels in the negative-electrode film layer and reduce a charge exchange resistance, and enables the negative-electrode film layer to form smoother pore channels, so as to improve wettability of the electrolyte. This further improves a solid-phase and liquid-phase transmission speed of active ions in the negative-electrode plate, and further improves the fast charging performance and cycling performance of the battery. In addition, the negative-electrode active material with the particle size specific surface area being within an appropriate range can also improve the compacted density of the negative-electrode film layer, thereby increasing the energy density of the battery.

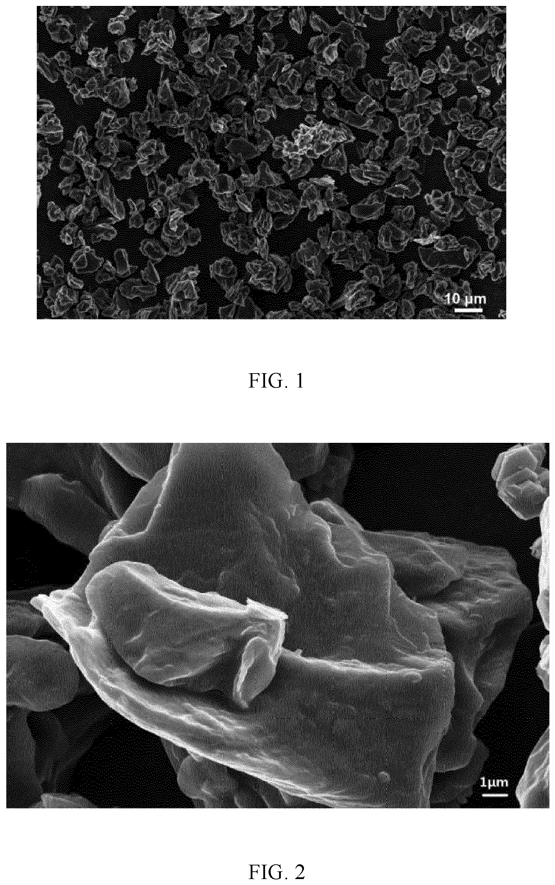

**In** some implementations, as shown in FIG. 1 and FIG. 2, secondary particles are included in the negative-electrode active material. Optionally, the quantity proportion of the secondary particles in the negative-electrode active material is ≥50%. For example, the quantity proportion of the secondary particles in the negative-electrode active material is 50%-100%, 60%-100%, 60%-90%, 70%-100%, 70%-95%, 70%-90%, 70%-80%, or 75%-85%. When the negative-electrode active material contains a large quantity of secondary particles, the active-ion deintercalation channels in the negative-electrode film layer increase, thereby further improving the fast-charging capability of the battery, reducing polarization, and improving the cycling performance. In particular, when the negative-electrode active material includes both secondary particles and primary particles, side reactions of the electrolyte in the negative electrode can be reduced, and the cycling performance and storage performance of the battery can be further improved.

In some implementations, the graphitization degree of the negative-electrode active material is 91.0%-96.0%, for example, may be 94.0%-95.0%, or 93.0%-94.5%. The negative-electrode active material with the graphitization degree being within the foregoing range can have a larger interlayer spacing in the particle structure, and has a lower powder resistance, further improving the fast-charging capability.

In some implementations, the gram capacity of the negative-electrode active material is 345mAh/g-360mAh/g, for example, may be 350mAh/g-358mAh/g, 351mAh/g-356mAh/g, or 352mAh/g-355mAh/g. The negative-electrode active material with a higher gram capacity can increase the energy density of the battery. The gram capacity of the negative-electrode active material being within the foregoing range means that the active-ion migration path of the material is short. This can improve the fast-charging capability of the battery.

In some implementations, a tap density of the negative-electrode active material is 0.9g/cm³-1.3g/cm³, for example, may be 1.0g/cm³-1.1g/cm³. The negative-electrode active material with the tap density being within the given range can make the particles of the negative-electrode film layer be in good contact, improving the fast-charging capability of the battery. In addition, the particles are tightly packed, which can further increase the energy density of the battery.

In some implementations, a powder compacted density of the negative-electrode active material under 2kN pressure is 1.55g/cm³-1.67g/cm³; and for example, may be 1.60g/cm³-1.65g/cm³. The negative-electrode active material with the powder compacted density under the pressure of 2kN being within the given range can implement close contact between the particles of the negative-electrode film layer to form good electrolyte infiltration pore channels, thereby improving the fast-charging capability and cycling performance of the battery.

In this application, Dᵥ99, Dᵥ90, Dᵥ50, Dᵥ10, the particle size uniformity (Uniformity), and the particle size specific surface area of the negative-electrode active material can be measured by using the laser diffraction particle size analysis method. For example, referring to the standard GB/T 19077-2016, a laser particle size analyzer (for example, Malvern Master Size 3000) is used for measurement.

Dᵥ99 is a particle size corresponding to a cumulative volume distribution percentage of the negative-electrode active material reaching 99%; Dᵥ90 is a particle size corresponding to a cumulative volume distribution percentage of the negative-electrode active material reaching 90%; Dᵥ50 is a particle size corresponding to a cumulative volume distribution percentage of the negative-electrode active material reaching 50%; and Dᵥ10 is a particle size corresponding to a cumulative volume distribution percentage of the negative-electrode active material reaching 10%.

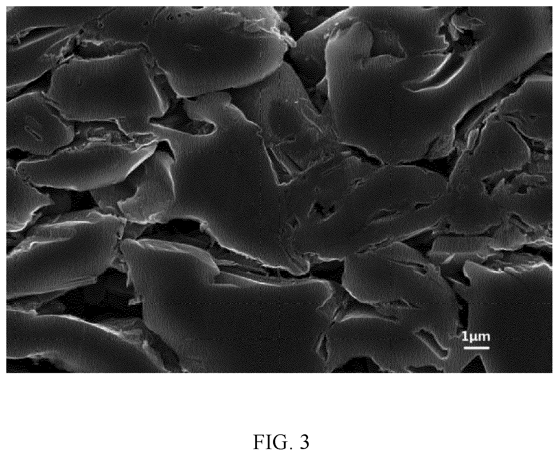

In this application, the negative-electrode active material can be made into a negative-electrode plate, and an ion polishing cross-section topography (CP) test is conducted on the negative-electrode plate to observe a material type of the core. As an example, the test method may be as follows: cutting a prepared negative-electrode plate into a to-be-tested sample of a specific size (for example, 2cm×2cm), and fastening the negative-electrode plate to a sample stage by using paraffin; placing the sample stage in a sample holder and locking the sample holder firmly, turning on an argon ion cross-section polisher (for example, IB-19500CP) and performing evacuation (for example, 10⁻⁴ Pa), setting argon flow (for example, 0.15MPa), voltage (for example, 8KV), and polishing time (for example, 2 hours), and then adjusting the sample stage to rocking mode to start polishing. For the sample test, refer to JY/T010-1996. A region of the to-be-tested sample may be randomly selected for scanning and testing, and an ion polishing cross-sectional topography (CP) image of the negative-electrode plate is obtained at a magnification (for example, 5000 times). For example, it can be seen from FIG. 3 of this application that the core of the negative-electrode active material of this application is artificial graphite.

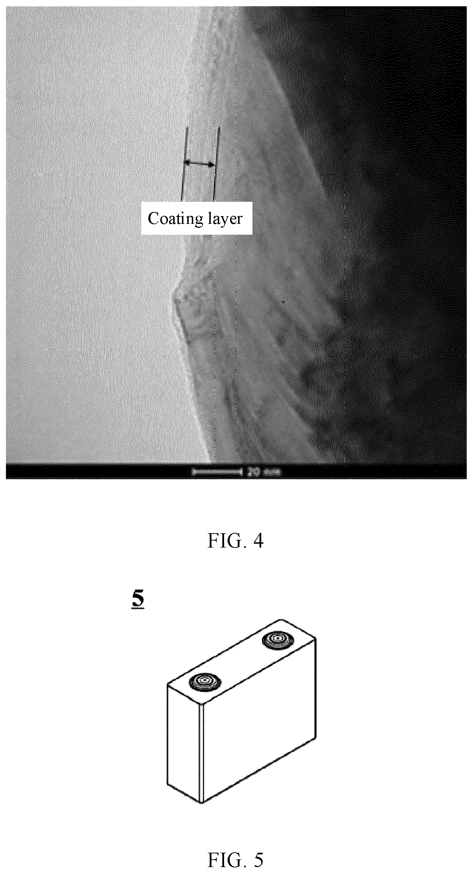

In this application, the structure of the negative-electrode active material (for example, the core and the coating layer) can be tested by using a device and method known in the art. As an example, the following steps may be performed: selecting a microgrid with a specific diameter (for example, 3mm in diameter), holding an edge of the microgrid with pointed tweezers, placing a membrane surface of the microgrid upward (to observe a shiny side, namely the membrane surface, under light), and gently placing it flat on white filter paper; adding an appropriate amount of graphite particle sample (for example, 1g) to a beaker containing an appropriate amount of ethanol, and performing ultrasonic vibration for 10 min to 30 min; sucking with a glass capillary and adding 2-3 drops of the to-be-tested sample on the microgrid; and after baking in the oven for 5 min, placing the microgrid with the to-be-tested sample on the sample stage, and conducting testing at a specific magnification (for example, 60,000 times) by using a transmission electron microscope (for example, Hitachi HF-3300S Cs-corrected STEM), so as to obtain a transmission electron microscope (TEM) image of the to-be-tested sample. For example, it can be seen from FIG. 4 of this application that the negative-electrode active material of this application includes the core and the coating layer.

In this application, the primary particle and secondary particle have meanings known in the art. The primary particle is a non-agglomerated particle, and the secondary particle is an agglomerated particle formed through aggregation of two or more primary particles. The primary particles and secondary particles can be easily distinguished with SEM images photographed by using a scanning electron microscope.

The quantity proportion of the secondary particles in the negative-electrode active material can be measured by using a method known in the art. An example test method is as follows: placing the negative-electrode active material flat and attaching it onto a conductive adhesive to obtain a to-be-tested sample 6cm long and 1.1cm wide; and conducting testing on the morphology of the particles by using a scanning electron microscope (for example, ZEISS Sigma 300). For testing, refer to JY/T010-1996. In order to ensure accuracy of test results, a plurality (for example, 5) of different regions of the to-be-tested sample may be randomly selected for scanning and testing, and a quantity proportion of the secondary particles in each region in the total number of particles is obtained through calculation at a magnification (for example, 1000 times), which is a quantity proportion of the secondary particles in the area. An average value of test results of the plurality of test regions is used as the quantity proportion of the secondary particles in the negative-electrode active material. In order to ensure accuracy of the test results, a plurality (for example, 10) of test samples may be used to repeat the foregoing test, and an average value of test results of all the test samples is used as the final test result.

The graphitization degree of the negative-electrode active material has a meaning known in the art, and can be tested by using a method known in the art. For example, an X-ray diffractometer (for example, Bruker D8 Discover) may be used. For testing, refer to JIS K 0131-1996 and JB/T 4220-2011. A size of d₀₀₂ is measured and then the graphitization degree is calculated according to a formula G=(0.344-d₀₀₂)/(0.344-0.3354)×100%, where d₀₀₂ is an interlayer spacing of the graphite crystal structure in nanometers (nm). In the X-ray diffraction analysis test, a copper target may be used as an anode target, CuKα rays are used as a radiation source, with a ray wavelength λ=1.5418Å and a scanning 2θ angle range of 20°-80°, and a scanning rate may be 4°/min.

The tap density of the negative-electrode active material has a meaning known in the art, and can be tested by using a method known in the art. For example, reference may be made to the standard GB/T 5162-2006, and a powder tap density tester may be used for testing. For example, the FZS4-4B type tap density meter manufactured by Beijing Iron and Steel Research Institute is used, and test parameters are as follows: vibration frequency: 250±15 times/min, amplitude: 3±0.2mm, vibration frequency: 5000 times, and measuring cylinder: 25 mL.

The powder compacted density of the negative-electrode active material under a pressure of 2kN has a meaning known in the art, and can be tested by using a method known in the art. For example, reference is made to the standard GB/T24533-2009, and an electronic pressure testing machine (for example, UTM7305) is used for testing. An example test method is as follows: weighing and adding 1g of the negative-electrode active material to a mold with a bottom area of 1.327cm², applying pressure to 200kg (equivalent to 2kN) and holding the pressure for 30s, releasing the pressure and waiting for 10s, and then recording and calculating the powder compacted density of the negative-electrode active material under the 2kN pressure.

The gram capacity of the negative-electrode active material has a meaning known in the art, and can be tested by using a method known in the art. An example test method is as follows: mixing the prepared negative-electrode active material, a conductive agent carbon black (Super P), and a binder polyvinylidene fluoride (PVDF) in a mass ratio of 91.6:1.8:6.6 evenly in a solvent N-methylpyrrolidone (NMP) to obtain a slurry, applying the prepared slurry on a copper foil current collector, and drying it in an oven for later use. A metal lithium sheet is used as a counter electrode, and a polyethylene (PE) film is used as the separator. Ethylene carbonate (EC), ethyl methyl carbonate (EMC), and diethyl carbonate (DEC) are mixed at a volume ratio of 1:1:1, and then LiPF₆ was uniformly dissolved in the foregoing solution to obtain an electrolyte, where the concentration of LiPF₆ is 1mol/L. A CR2430 coin battery is assembled in an argon gas-protected glove box. After being left standing for 12 hours, the obtained coin battery is discharged to 0.005V at a constant current of 0.05C at 25°C and left standing for 10 minutes; discharged to 0.005V at a constant current of 50 µA, left standing for 10 minutes, and discharged to 0.005V at a constant current of 10 µA; and then charged to 2V at a constant current of 0.1C. A-charging capability is recorded. A ratio of the-charging capability to the mass of the negative-electrode active material is the gram capacity of the prepared negative-electrode active material.

It should be noted that, for testing of the foregoing parameters of the negative-electrode active material, a negative-electrode active material sample may be directly used for testing, or a sample for testing may be obtained from the secondary battery.

In a case that the foregoing testing samples are fetched from the secondary battery, as an example, a sample may be obtained by performing the following steps:
(1) discharging the secondary battery (for sake of safety, generally making the battery in fully discharged state), disassembling the battery, and taking out the negative-electrode plate, using dimethyl carbonate (DMC) to soak the negative-electrode plate for a specific time (for example, 2-10 hours); and then taking out the negative-electrode plate and drying it at a given temperature for a specific time (for example, 60°C, 4h), and taking out the negative-electrode plate obtained after drying;
(2) baking, at a given temperature for a specific time (for example, 400°C, 2h), the negative-electrode plate obtained after drying in step (1), randomly selecting a region from the negative-electrode plate obtained after baking, and obtaining a negative-electrode active material sample (the sample may be obtained by scraping powder using a blade); and
(3) sieving the negative-electrode active material collected in step (2) (for example sieving with a 200-mesh screen), to finally obtain the negative-electrode active material sample that can be used for testing the foregoing material parameters of this application.

This application provides a preparation method of the negative-electrode active material below, and the negative-electrode active material can be obtained by using the preparation method. The preparation method of the negative-electrode active material may include the following steps (A) and (B).
(A) providing a core, where the core includes artificial graphite; and
(B) coating the core to form a coating layer on at least part of a surface of the core, so as to obtain a negative-electrode active material, where the coating layer includes amorphous carbon, and the negative-electrode active material satisfies Dᵥ99 ≤ 24µm and 8µm ≤ Dᵥ50 ≤ 15µm.

In some implementations, in step (A), the preparation method of artificial graphite may include steps (a) to (d).
(a) providing a coke raw material;
(b) performing shaping processing on the coke raw material to obtain a precursor;
(c) granulating the precursor to obtain a granulated product; and
(d) graphitizing the granulated product to obtain artificial graphite, where a volume-based median particle size Dᵥ50 of the artificial graphite is 6µm-14µm, and a volume-based particle size distribution Dᵥ99 is 17µm-26µm.

In some implementations, Dᵥ50 and Dᵥ99 of the coke raw material can be adjusted, so that Dᵥ50 of the coke raw material is 7µm-12µm, and Dᵥ99 is 15µm-21µm. The coke raw material with Dᵥ50 and Dᵥ99 being within the given ranges helps improve subsequent shaping and granulation processes, so that the final negative-electrode active material has an appropriate secondary particle content and appropriate Dᵥ50 and Dᵥ99. Optionally, Dᵥ50 of the coke raw material is 8µm-12µm, 8µm-11.5µm, or 9µm-11µm. Optionally, Dᵥ99 of the coke raw material is 16µm-21µm, 17µm-21µm, 17µm-20µm, or 17µm-19µm.

In step (a), the coke raw material can be directly obtained commercially, or be obtained by pulverizing the coke material. In some implementations, the coke material may be pulverized to control Dᵥ50 and Dᵥ99 of the coke raw material within desired ranges. The coke material may be pulverized by using a device and method known in the art, for example, through jet milling, mechanical milling, or roller milling. A large quantity of extremely small particles are usually generated during pulverization, and sometimes there are also extremely large particles. Therefore, after pulverization, classification may be performed according to requirements, so as to remove extremely small particles and extremely large particles from the pulverized powder. The coke raw material with desired particle size distribution can be obtained after classification. Classification may be performed by using a device and method known in the art, for example, a classification screen, a gravity classifier, or a centrifugal classifier.

Pulverization of the coke material may be performed at a process step including a pulverizer, a classifier and an induced draft fan. During pulverization, Dᵥ50 and Dᵥ99 of the obtained coke raw materials can be controlled within desired ranges by adjusting feeding frequency, pulverizing frequency, classification frequency, and induced drafting frequency. Compared with relatively low classification frequency in the conventional pulverization process, the method in this application can increase the classification frequency, which helps remove excessively small particles. Compared with relatively high induced drafting frequency in the conventional pulverization process, the method in this application can increase the induced drafting frequency, which helps remove excessively large particles. In addition, compared with the conventional pulverization process that controls the frequency within a larger range, the method in this application can also control frequency of the main engine, classification frequency, and induced drafting frequency within a smaller frequency range, thereby reducing particle size distribution of the coke raw material. For example, Dᵥ50 and Dᵥ99 of the coke raw material are controlled within smaller ranges. The feeding frequency can also be adjusted to control a feeding amount, further improving pulverization effects of the material.

In some implementations, the feeding frequency may be 10Hz-40Hz, for example, 25Hz-35Hz.

In some implementations, the pulverization frequency may be 20Hz-50Hz, for example, 35Hz-45Hz.

In some implementations, the classification frequency may be 20Hz-50Hz, for example, 40Hz-50Hz.

In some implementations, the induced drafting frequency may be 30Hz-55Hz, for example, 35Hz-45Hz.

Those skilled in the art may choose to adjust one or more of the foregoing process conditions according to actual operation conditions, and finally obtain the coke raw material with Dᵥ50 of 7µm-12µm and Dᵥ99 of 15µm-21µm.

In some implementations, the coke raw material in step (a) includes one or more of petroleum-based non-needle coke and petroleum-based needle coke. Optionally, the coke raw material includes petroleum green coke.

In some implementations, the volatile content C₁ of the coke raw material in step (a) satisfies 1% ≤ C₁ ≤ 12%. Optionally, the volatile content C₁ of the coke raw material is 3%-10%, 5%-9%, 6%-8%, 7%-8.5%, 7.5%-8.5%, or the like. The coke raw material with the volatile content being within an appropriate range helps improve the particle size distribution of the material in the subsequent granulation process, so that the negative-electrode active material has desired particle size distribution. In addition, the coke raw material with the volatile content being within an appropriate range can also make the prepared artificial graphite have higher structural strength, and increase the cycle life of the negative-electrode active material, thereby improving the cycling performance of the battery.

The volatile content of the coke raw material can be tested by using a method known in the art. For example, refer to SH/T 0026-1990 for testing.

In step (b), edges and corners of particles of the coke raw material can be polished through shaping, which is conducive to the subsequent granulation process, so that the secondary particles in the resulting negative-electrode active material have higher structural stability. Shaping treatment on the coke raw material may be performed by using a device and method known in the art, such as a shaping machine or other shaping devices.

In some implementations, after shaping treatment of the coke raw material, classification is further performed, so that the precursor has Dᵥ50 of 8µm-13µm and Dᵥ99 of 16µm-22µm. In this way, the negative-electrode active material obtained finally has an appropriate content of the secondary particles and has appropriate Dᵥ50 and Dᵥ99. Optionally, Dᵥ50 of the precursor is 9µm-12µm, 9µm-11µm, 10µm-12µm, or 10µm-11µm. Dᵥ99 of the precursor is 17µm-22µm, 18µm-21µm, or 18µm-20µm. Classification may be performed by using a device and method known in the art, for example, a classification screen, a gravity classifier, or a centrifugal classifier.

Shaping and classification can be performed at a process step including a shaping machine, a classification machine, and an induced draft fan. During shaping and classification, Dᵥ50 and Dᵥ99 of the obtained precursor can be controlled within a required range by adjusting shaping frequency (for example, main-machine frequency and auxiliary-machine frequency of the shaping machine), classification frequency, and induced drafting frequency. The inventor has found that, compared with a conventional shaping and classification process, the method of this application improves the shaping frequency during processing, appropriately prolongs a shaping time, and also reduces the classification frequency and induced drafting frequency during processing, so that Dᵥ50 and Dᵥ99 of the obtained precursor are controlled within a target range.

The obtained precursor may also have an appropriate particle size uniformity (Uniformity) (U₁), which helps improve the particle size uniformity of the obtained negative-electrode active material.

In some implementations, the particle size uniformity U₁ of the precursor satisfies 0.2 ≤ U₁ ≤ 0.55, for example, 0.2 ≤ U₁ ≤ 0.5, 0.25 ≤ U₁ ≤ 0.45, 0.3 ≤ U₁ ≤ 0.45, 0.3 ≤ U₁ ≤ 0.4, 0.35 ≤ U₁ ≤ 0.55, or 0.35 ≤ U₁ ≤ 0.45.

In some implementations, in step (b), shaping and classification are performed on the coke raw material based on the following values of the shaping machine: a main-machine frequency of 35Hz-40Hz, an auxiliary-machine frequency of 60Hz-70Hz, a classification frequency of 40Hz-50Hz, an induced drafting frequency of 10Hz-25Hz, and a shaping time of 160-180s, so as to obtain the precursor with Dᵥ50 of 8µm-13µm and Dᵥ99 of 16µm-22µm.

In step (c), the precursor is granulated to form secondary particles by agglomerating independently dispersed primary particles. As a result, isotropy of the artificial graphite is improved, and active ions can be intercalated into the particles from all directions, thereby improving a solid-phase lithium intercalation rate and reducing polarization.

In some implementations, Dᵥ50 of the granulated product obtained in step (c) may be 9µm-15µm, and Dᵥ99 is 17µm-24µm. Optionally, Dᵥ50 of the granulated product is 10µm-14µm, 11µm-15µm, or 11µm-13µm. Optionally, Dᵥ99 of the granulated product is 18µm-24µm, or 19µm-22µm. The granulated product with Dᵥ50 and Dᵥ99 being within appropriate ranges makes Dᵥ50 and Dᵥ99 of the finally obtained negative-electrode active material fall within a desired ranges.

Granulation may be performed in step (c) by using a device known in the art, for example, a granulator. The granulator usually includes an agitating reactor and a temperature control module for the reactor. The granulation degree can be adjusted by adjusting a stirring speed, heating rate, granulation temperature, cooling rate, and the like in the granulation process, and Dᵥ50 and Dᵥ99 of the resulting granulated product can also be controlled within the desired ranges. Further, through adjustment in the foregoing granulation process, Dᵥ10 and Dᵥ90 of the resulting granulated product can also be controlled within the required ranges, so that Dᵥ10 and Dᵥ90 of the finally obtained negative-electrode active material can meet the requirements.

In some implementations, the precursor can be mixed with a binder, and then granulated at a high temperature. A mixing temperature may be 20°C to 40°C. Compared with a preparation process of conventional graphite, this application appropriately increases mixing frequency and shortens a mixing time, thereby improving the granulation degree and helping control Dᵥ50 and Dᵥ99 of the resulting granulated product within required ranges.

A temperature for high-temperature granulation may be determined based on a type of the binder. The binder is softened at a high temperature to bond particles, implementing granulation. In some implementations, the binder is asphalt. In these embodiments, the granulation temperature may range from 700°C to 800°C. This application further improves a heating program of the high-temperature granulation process, and uses stepwise heating. A plurality (for example, 2 to 4) of programmed heating platforms are set in the heating process, so that the granulated product can obtain the desired particle size distribution. In addition, the particle size uniformity (Uniformity) of the granulated product is relatively good, so that the subsequent artificial graphite and the final negative-electrode active material product can obtain a better particle size uniformity.

In some implementations, in step (c), the mixing frequency can be controlled to be 35Hz-38Hz, and the mixing time is 50min-65min. The temperature is increased to 300°C-400°C at 6-10°C/min and maintained at the temperature for 1h-2h; increased to 500°C-600°C at 6-10°C/min and maintained at the temperature for 1h-2h; increased to 700°C-800°C at 6-10°C/min and maintained at the temperature for 1h-2h; and then is naturally cooled, so as to obtain a granulated product.

In some implementations, in step (c), an amount C₂ of the binder that is added during granulation, the volatile content C₁ of the coke raw material, and the particle size uniformity U₁ of the precursor satisfy: 21% ≤ (C₁+C₂)/U₁ × 100% ≤ 50%. Optionally, 25% ≤ (C₁+C₂)/U₁ × 100% ≤ 45%, 25% ≤ (C₁+C₂)/U₁ × 100% ≤ 38%, 27% ≤ (C₁+C₂)/U₁ × 100% ≤ 38%, 30% ≤ (C₁+C₂)/U₁ × 100% ≤ 40%, or 31% ≤ (C₁+C₂)/U₁ × 100% ≤ 35%. When the amount C₂ of the binder that is added during granulation, the volatile content C₁ of the coke raw material, and the particle size uniformity U₁ of the precursor satisfy the foregoing relationship, the granulation degree of particles of the negative-electrode active material can be improved, and the ion deintercalation performance and structural stability of the negative-electrode active material can be improved.

The amount C₂ of the binder added during granulation is a percentage of the weight of the binder added during granulation in the total weight of the precursor. The granulation process is performed under a condition with the binder added or not added.

In some implementations, the amount of the binder C₂ added during granulation may satisfy 0% ≤ C₂ ≤ 16%, optionally, 1% ≤ C₂ ≤ 12%, 2% ≤ C₂ ≤ 10%, 4% ≤ C₂ ≤ 7%, or 5% ≤ C₂ ≤ 9%.

In some implementations, in step (d), graphitization is performed on the granulated product at a temperature of 2800°C to 3200°C, so as to obtain artificial graphite with an appropriate graphitization degree. Optionally, the temperature for graphitization may be 2900°C to 3100°C.

In step (d), graphitization may be performed by using a device known in the art, for example, a graphitization furnace, and further for example, an Acheson graphitization furnace. After graphitization is completed, a small quantity of extremely large particles formed by agglomeration in the high-temperature graphitization process may be removed from the granulated product through sieving, so that Dᵥ50 and Dᵥ99 of the final negative-electrode active material fall within the required ranges.

In some implementations, Dᵥ50 of the artificial graphite obtained in step (d) may be 6.5µm-14µm, 7µm-14µm, 6µm-13µm, 7µm-13.5µm, 8µm-12µm, 9µm-12µm, 9µm-11µm, 10µm-13µm, 10µm-12µm, 6.5µm-12µm, or 6.5µm-12.5µm.

In some implementations, Dᵥ99 of the artificial graphite obtained in step (d) may be 18µm-24µm, 19µm-26µm, 21µm-26µm, 20µm-25µm, 20µm-23µm, or 19.5µm-22µm.

In some implementations, the particle size uniformity U₂ of the artificial graphite obtained in step (d) may satisfy 0.22 ≤ U₂ ≤ 0.48, optionally, 0.25 ≤ U₂ ≤ 0.45, 0.26 ≤ U₂ ≤ 0.43, 0.3 ≤ U₂ ≤ 0.4, or 0.33 ≤ U₂ ≤ 0.38. The obtained artificial graphite with the particle size uniformity being within an appropriate range helps make the particle size uniformity of the finally obtained negative-electrode active material be within a desired range.

In some implementations, the step (B) may include: (e) coating the core with an organic carbon source and performing heat treatment to form an amorphous carbon coating layer on at least part of the surface of the core, so as to obtain the negative-electrode active material.

In some implementations, in step (e), after an amorphous carbon coating layer is formed on at least part of the surface of the core, sieving is performed to obtain the negative-electrode active material.

As an example, the artificial graphite obtained in step (d) may be mixed with the organic carbon source, so that the organic carbon source coats at least part of a surface of the artificial graphite. Heating treatment is then performed at a temperature of 700°C to 1800°C to carbonize the organic carbon source, so as to form an amorphous carbon coating layer on at least part of the surface of the artificial graphite. Optionally, the temperature of heating treatment is 1000°C to 1300°C.

In some implementations, an amount C₃ of the organic carbon source that is added in the coating process, a volatile content C₁ of the coke raw material, an amount C₂ of the binder, and a particle size uniformity U₂ of the artificial graphite satisfy: 20% ≤ (C₁+C₂+C₃)/U₂ × 100% ≤ 56%. The organic carbon source satisfies 1.2% ≤ C₃ × carbon residue rate ≤ 2.5%. The amount C₃ of the organic carbon source is a percentage of a weight of the organic carbon source added in the coating process in the total weight of the artificial graphite. The carbon residue rate is a carbon residue rate of the organic carbon source, which can be measured by using an LP-5731 coal pitch coking value tester. For the testing, refer to GB/T268 "Test Method for Carbon Residues in Petroleum Products", and GB/T8727-2008 "Test Method for Coking Values of Coal Pitch Products".

The amount of the organic carbon source added in the coating process satisfying the foregoing relationship can improve the granulation degree of the negative-electrode active material, so that the particle size uniformity of negative-electrode active material, the particle size specific surface area, and a quantity proportion of the secondary particles fall within the foregoing ranges. In addition, when the amount of the organic carbon source falls within the foregoing range, and the coating layer has an appropriate proportion in the negative-electrode active material, the negative-electrode active material can have both good kinetic performance and long cycle life. Optionally, 30% ≤ (C₁+C₂+C₃)/U₂ × 100% ≤ 48%. Further optionally, 40% ≤ (C₁+C₂+C₃)/U₂ × 100% ≤ 48%. Optionally, 1.5% ≤ C₃ × carbon residue rate ≤ 2.4%, 1.8% ≤ C₃ × carbon residue rate ≤ 2.3%, or 2% ≤ C₃ × carbon residue rate ≤ 2.2%.

Optionally, 2% ≤ C3 ≤ 8%. For example, C₃ may be 3%, 4%, 5%, 6%, or 7%.

In some implementations, the organic carbon source may be selected from one or more of pitch (for example, coal pitch or petroleum pitch), phenolic resin, coconut shell, and the like, and further optionally, is pitch.

In the foregoing preparation process, the coke raw material usually contains some impurity elements (for example, iron, nickel, chromium, zinc, sulfur, or silicon), and some impurity elements (such as iron or copper) may also be introduced by devices used during pulverization, shaping, the granulation. In normal cases, content of the impurity elements in the core is small, generally less than 1 ppm.

In the foregoing preparation process, the organic carbon source used in the coating process and the device used for coating may introduce a trace amount of impurity elements in the coating layer.

### Secondary battery

This application further provides a secondary battery. The secondary battery includes a positive-electrode plate, a negative-electrode plate, and an electrolyte. During charging and discharging of the battery, active ions are intercalated and deintercalated back and forth between the positive-electrode plate and the negative-electrode plate. The electrolyte is between the positive-electrode plate and the negative-electrode plate, and plays a role of conducting ions.

### [Negative-electrode plate]

In the secondary battery of this application, the negative-electrode plate includes a negative-electrode current collector and a negative-electrode film layer provided on at least one surface of the negative-electrode current collector, where the negative-electrode film layer includes any one or more of the negative-electrode active materials in this application.

In some implementations, optionally, in addition to the foregoing negative-electrode active material of this application, the negative-electrode film layer may further include a specific quantity of other commonly used negative-electrode active materials, for example, one or more of natural graphite, other artificial graphite, soft carbon, hard carbon, silicon-based materials, tin-based materials, and lithium titanate. The silicon-based material may be selected from one or more of elemental silicon, silicon oxide, and silicon-carbon composite. The tin-based material may be selected from one or more of elemental tin, tin-oxygen compound, and tin alloy.

In the secondary battery of this application, the negative-electrode film layer usually includes the negative-electrode active material and optionally a binder, optionally a conductive agent, and other optional auxiliary agents, and is usually obtained through drying after a negative-electrode slurry is applied. The negative-electrode slurry is usually obtained by dispersing the negative-electrode active material and optionally a conductive agent, a binder, or the like in a solvent and stirring uniformly. The solvent may be N-methylpyrrolidone (NMP) or deionized water.

As an example, the conductive agent is one or more of superconducting carbon, carbon black (for example, acetylene black or Ketjen black), carbon dots, carbon nanotube, graphene, and carbon nanofiber.

As an example, the binder may include one or more of styrene-butadiene rubber (SBR), water-soluble unsaturated resin SR-1B, water-based acrylic resin, polyvinyl alcohol (PVA), sodium alginate (SA), and carboxymethyl chitosan (CMCS).

Other optional auxiliary agents are, for example, a thickener (for example, sodium carboxymethyl cellulose CMC-Na) or a PTC thermistor material.

In addition, in the secondary battery of this application, the negative-electrode plate does not exclude additional functional layers other than the negative-electrode film layer. For example, in some implementations, the negative-electrode plate of this application may further include a conductive primer layer (which is, for example, formed by a conductive agent and a binder) sandwiched between the negative-electrode current collector and the first negative-electrode film layer and disposed on the surface of the negative-electrode current collector. In some other implementations, the negative-electrode plate of this application may further include a protective layer covering a surface of a second negative-electrode film layer.

### [Positive-electrode plate]

In the secondary battery of this application, the positive-electrode plate includes a positive-electrode current collector and a positive-electrode film layer that is provided on at least one surface of the positive-electrode current collector and that includes a positive-electrode active material. For example, the positive-electrode current collector has two surfaces opposite in its thickness direction, and the positive-electrode film layer is provided on either or both of the two opposite surfaces of the positive-electrode current collector.

In the secondary battery of this application, a positive-electrode active material for the secondary battery known in the art can be used as the positive-electrode active material. For example, the positive-electrode active material may include one or more of lithium transition metal oxide, olivine-structured lithium-containing phosphate, and respective modified compounds thereof. Examples of the lithium transition metal oxide may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the olivine-structured lithium-containing phosphate may include, but are not limited to, one or more of lithium iron phosphate, lithium iron phosphate-carbon composite, lithium manganese phosphate, lithium manganese phosphate-carbon composite, lithium iron manganese phosphate, lithium iron manganese phosphate-carbon composite, and respective modified compounds thereof. This application is not limited to these materials, and other conventionally known materials that can be used as positive-electrode active materials for secondary batteries can also be used.

In some optional implementations, in order to further increase the energy density of the battery, the positive-electrode active material may include one or more of the lithium transition metal oxides shown in Formula 1 and modified compounds thereof.

LiₐNi_{b}Co_{c}M_{d}OₑA_{f} Formula 1

In Formula 1, 0.8 ≤ a ≤ 1.2, 0.5 ≤ b ≤ 1, 0 ≤ c ≤ 1, 0 ≤ d ≤ 1, 1 ≤ e ≤ 2, or 0 ≤ f ≤ 1, where M is selected from one or more of Mn, Al, Zr, Zn, Cu, Cr, Mg, Fe, V, Ti, and B; and A is selected from one or more of N, F, S, and Cl.

In this application, the modified compounds of the foregoing materials may be modified by doping or surface coating on the positive-electrode active material.

In the secondary battery of this application, the positive-electrode film layer usually includes the positive-electrode active material and optionally a binder, optionally a conductive agent, and is usually obtained through drying and cold pressing after a positive-electrode slurry is applied. The positive-electrode slurry is usually obtained by dispersing the positive-electrode active material and optionally a conductive agent, a binder, or the like in a solvent and stirring uniformly. The solvent may be N-methylpyrrolidone (NMP).

As an example, the binder for the positive-electrode film layer may include one or more of polyvinylidene fluoride (PVDF) and polytetrafluoroethylene (PTFE).

As an example, the conductive agent for the positive-electrode film layer may include one or more of superconducting carbon, carbon black (for example, acetylene black or Ketjen black), carbon dots, carbon nanotube, graphene, and carbon nanofiber.

In the secondary battery of this application, the positive-electrode current collector may use a metal foil or a composite current collector (a metal material may be provided on a polymer matrix to form the composite current collector). As an example, the positive-electrode current collector may use an aluminum foil.

### [Electrolyte]

The secondary battery of this application has no specific limitation on a type of the electrolyte, which can be selected as required. For example, the electrolyte may be selected from at least one of solid electrolyte and liquid electrolyte (that is, electrolyte).

In some implementations, the electrolyte uses a liquid electrolyte. The electrolyte includes an electrolytic salt and a solvent.

In some implementations, the electrolytic salt may be selected from one or more of LiPF₆ (lithium hexafluorophosphate), LiBF₄ (lithium tetrafluoroborate), LiClO₄ (lithium perchlorate), LiAsF₆ (lithium hexafluoroborate), LiFSI (lithium bisfluorosulfonyl imide), LiTFSI (lithium bis-trifluoromethanesulfon imide), LiTFS (lithium trifluoromethanesulfonat), LiDFOB (lithium difluorooxalatoborate), LiBOB (lithium bisoxalatoborate), LiPO₂F₂ (lithium difluorophosphate), LiDFOP (lithium difluorophosphate), and LiTFOP (lithium tetrafluoro oxalate phosphate).

In some implementations, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), methyl ethyl sulfone (EMS), and diethyl sulfone (ESE).

In some implementations, the electrolyte further optionally includes an additive. For example, the additive may include a negative-electrode film forming additive, or may include a positive-electrode film forming additive, or may include an additive capable of improving some performance of a battery, for example, an additive for improving over-charge performance of the battery, an additive for improving high-temperature performance of the battery, and an additive for improving low-temperature performance of the battery.

### [Separator]

In secondary batteries using the liquid electrolyte and some secondary batteries using the solid electrolyte, separators are also included. The separator is provided between the positive-electrode plate and the negative-electrode plate, and plays a role of isolation. There is no particular limitation on the type of the separator in this application, and any known porous-structure separator with good chemical stability and mechanical stability can be selected. In some implementations, a material of the separator may be selected from one or more of glass fiber, non-woven fabric, polyethylene, polypropylene, and polyvinylidene fluoride. The separator may be a single-layer thin film or a multi-layer composite film. When the separator is a multi-layer composite film, each layer may be made of the same or different materials.

In some implementations, the positive-electrode plate, the negative-electrode plate, and the separator may be made into an electrode assembly through wounding or lamination.

In some implementations, the secondary battery may include an outer package. The outer package may be used to encapsulate the foregoing electrode assembly and electrolyte.

In some implementations, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic, for example, one or more of polypropylene (PP), polybutylene terephthalate (PBT), polybutylene succinate (PBS), and the like.

This application does not impose any special limitations on a shape of the secondary battery, and the lithium-ion battery may be of a cylindrical shape, a rectangular shape, or any other shape. FIG. 5 shows a secondary battery 5 with a rectangular structure in an example.

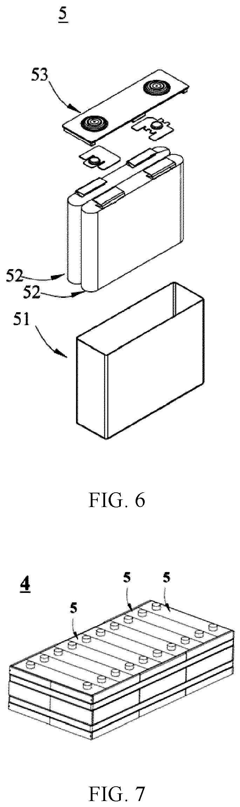

In some implementations, referring to FIG. 6, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 covers the opening to close the accommodating cavity. A positive-electrode plate, a negative-electrode plate, and a separator may be made into an electrode assembly 52 through winding or lamination. The electrode assembly 52 is encapsulated into the accommodating cavity. The electrolyte is infiltrated into the electrode assembly 52. There may be one or more electrode assemblies 52 in the secondary battery 5, and the quantity may be adjusted as required.

In some implementations, the secondary batteries may be assembled into a battery module. The battery module may include a plurality of secondary batteries, and a specific quantity may be adjusted based on application and capacity of the battery module.

FIG. 7 shows a battery module 4 in an example. Referring to FIG. 7, in the battery module 4, a plurality of secondary batteries 5 may be sequentially arranged in a length direction of the battery module 4. Certainly, an arrangement may be made in any other manner. Further, the plurality of secondary batteries 5 may be fastened through fasteners.

Optionally, the battery module 4 may further include a housing with an accommodating space, and the plurality of secondary batteries 5 are accommodated in the accommodating space.

In some implementations, the battery module may be further assembled into a battery pack, and a quantity of battery modules included in the battery pack may be adjusted based on application and capacity of the battery pack.

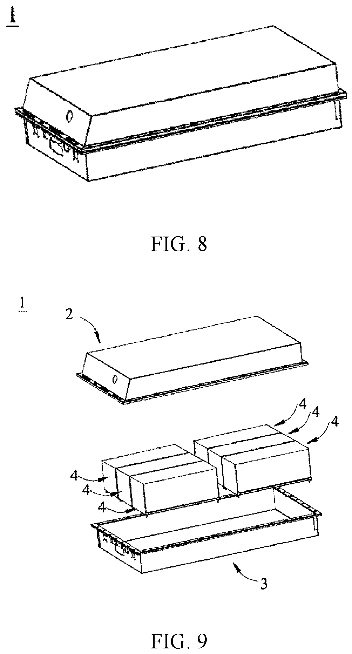

FIG. 8 and FIG. 9 show a battery pack 1 in an example. Referring to FIG. 8 and FIG. 9, the battery pack 1 may include a battery box and a plurality of battery modules 4 arranged in the battery box. The battery box includes an upper box body 2 and a lower box body 3. The upper box body 2 is configured to cover the lower box body 3 to form a closed space for accommodating the battery modules 4. The plurality of battery modules 4 may be arranged in the battery box in any manner.

### Apparatus

This application further provides an apparatus. The apparatus includes at least one of the secondary battery, the battery module, or the battery pack according to this application. The secondary battery, the battery module, or the battery pack may be used as a power source of the apparatus, or an energy storage unit of the apparatus. The apparatus may be, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like. A secondary battery, a battery module, or a battery pack may be selected for the apparatus according to requirements for using the apparatus.

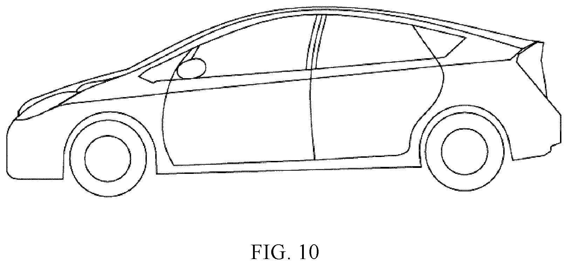

FIG. 10 shows an apparatus in an example. The apparatus is a battery electric vehicle, a hybrid electric vehicle, a plug-in hybrid electric vehicle, or the like. To meet requirements of the apparatus for high power and a high energy density, a battery pack or a battery module may be used.

In another example, the apparatus may be a mobile phone, a tablet computer, a notebook computer, or the like. The apparatus is usually required to be light and thin, and the secondary battery may be used as a power source.

### Examples

Content disclosed in this application is described in more details in the following examples. These examples are intended only for illustrative purposes because various modifications and changes made without departing from the scope of the content disclosed in this application are apparent to those skilled in the art. Unless otherwise stated, all parts, percentages, and ratios reported in the following examples are based on weights, all reagents used in the examples are commercially available or synthesized in a conventional manner, and can be used directly without further processing, and all instruments used in the examples are commercially available.

### I. Preparation of the battery

### Example 1

### Preparation of the negative-electrode active material

Petroleum green coke was used, with a volatile content C₁ being 7.87%. The petroleum green coke was pulverized to obtain a coke raw material with Dᵥ50 of 11.8µm and Dᵥ99 of 20.1µm.

Shaping and classification were performed on the coke raw material to obtain a precursor with Dᵥ50 of 13.0µm and Dᵥ99 of 21.3µm.

The precursor was granulated by using a binder pitch, and an amount of the binder C₂ was 5%. The resulting granulated product had Dᵥ50 of 13.7µm and Dᵥ99 of 21.9µm.

Graphitization was performed on the granulated product at a temperature of 3000°C, followed by sieving, to obtain artificial graphite. Dᵥ99 of the artificial graphite was 22.9µm.

Then, the artificial graphite was coated with the organic carbon source pitch, graphitization treatment was performed, to obtain a negative-electrode active material, including an artificial graphite core and an amorphous carbon coating layer covering a surface of the artificial graphite core. An amount of the organic carbon source C₃ was 3%, and the negative-electrode active material satisfied Dᵥ50 of 14.5µm, Dᵥ99 of 22.3µm, and a gram capacity of 355.2mAh/g.

### Preparation of the negative-electrode plate

The negative-electrode active material prepared above, a binder styrene-butadiene rubber (SBR), a thickener sodium carboxymethyl cellulose (CMC-Na), and a conductive agent carbon black (Super P) were fully stirred and mixed in an appropriate amount of deionized water in a weight ratio of 96.2:1.8: 1.2:0.8, to form a uniform negative-electrode slurry; and the negative-electrode slurry was applied on a surface of a copper foil negative-electrode current collector, followed by drying, cold pressing, slitting, and cutting, to obtain a negative-electrode plate. A compacted density of the negative-electrode plate was 1.65g/cm³, and an areal density was 123g/m².

### Preparation of the positive-electrode plate

Lithium nickel cobalt manganese oxide LiNi_{0.8}Co_{0.1}Mn_{0.1}O₂ (NCM811), a conductive agent carbon black (Super P), and a binder PVDF were fully stirred and mixed in an appropriate amount of N-methylpyrrolidone (NMP) in a weight ratio 97.5:1.5:1, to form a uniform positive-electrode slurry; and the positive-electrode slurry was applied on a surface of an aluminum foil positive-electrode current collector, followed by drying, cold pressing, slitting, and cutting, to obtain a positive-electrode plate. A compacted density of the positive-electrode plate was 3.5g/cm³, and an areal density was 196g/m².

### Separator

### A polyethylene (PE) film was used as a separator.

### Preparation of the electrolyte

Ethylene carbonate (EC), ethyl methyl carbonate (EMC), and diethyl carbonate (DEC) were mixed at a volume ratio of 1:1:1, and then fully dried lithium salt LiPF₆ was uniformly dissolved in the foregoing solution to obtain an electrolyte, where the concentration of LiPF₆ was 1mol/L.

### Preparation of the secondary battery

A positive-electrode plate, a separator, and a negative-electrode plate were stacked in order, and a reference electrode (where the reference electrode is used for subsequent performance testing of battery samples, and may be selected from a lithium sheet, lithium metal wire, or the like; and the reference electrode needs to be separated by the separator to avoid coming in contact with either side of the positive-electrode plate and the negative-electrode plate) was added between the separator and the negative-electrode plate. The stack was made into an electrode assembly through winding, the electrode assembly was encapsulated into an outer package, and the electrolyte was added, followed by the processes of encapsulation, standing, chemical formation, aging, and the like, to obtain a secondary battery.

The preparation methods in Examples 2 to 20 are similar to those in Comparative Example 1, with the only difference in preparation parameters of the negative-electrode active material. For details about different preparation parameters and product parameters, refer to Table 2 to Table 5.

### II. Battery performance testing

### (1) Fast charging performance testing

The secondary batteries prepared in the Examples and Comparative Examples were charged at 25°C to 4.25V at a constant current of 1C (that is, a current value at which a theoretical capacity is completely discharged in 1h), charged to a current of 0.05C at a constant voltage, left standing for 5min, and then discharged to 2.8V at a constant current of 1C; and an actual capacity was recorded as C₀.

Then, the batteries were charged to 4.25V or 0V negative cut-off potential (whichever comes first) successively at a constant current of 0.5C₀, 1C₀, 1.5C₀, 2C₀, 2.5C₀, 3C₀, 3.5C₀, 4C₀, and 4.5C₀, and needed to be discharged to 2.8V at 1C₀ after each charge was completed. Corresponding negative potentials for charging to 10%, 20%, 30%, ..., and 80% SOC (State of Charge, state of charge) at different charging rates were recorded, and rate-negative potential curves in different SOC states were drawn. Charging rates corresponding to the negative potential of 0V in different SOC states were obtained through linear fitting, and were denoted by C_{20%SOC}, C_{30%SOC}, C_{40%SOC}, C_{50%SOC}, C_{60%SOC}, C_{70%SOC}, and C_{80%SOC}. According to a formula (60/C_{20%SOC} + 60/C_{30%SOC} + 60/C_{40%SOC} + 60/C_{50%SOC} + 60/C_{60%SOC} + 60/C_{70%SOC} + 60/C_{80%SOC}) × 10%, a charging time T (min) for charging the battery from 10% SOC to 80% SOC was obtained through calculation. A shorter time indicates better fast charging performance of the battery.

### (2) Cycling performance testing

The secondary batteries prepared in the Examples and Comparative Examples were charged at 25°C to 4.25V at a constant current of 0.33C, charged to a current of 0.05C at a constant voltage, left standing for 5min, and then discharged to 2.8V at a constant current of 0.33C; and an initial capacity was recorded as C₀. Then, the batteries were charged according to strategies in Table 1, and discharged at 0.33C. A discharging capacity Cₙ of each cycle was recorded, until a cycling capacity retention rate (Cₙ/C₀×100%) became 80%; and then the number of cycles was recorded. A larger quantity of cycles indicates a longer cycle life of the battery.

**Table 1**

| State of charge SOC of battery | Charging rate (C) |
|---|---|
| 0-10% | 0.33 |
| 10%-20% | 3.8 |
| 20%-30% | 2.9 |
| 30%-40% | 2.4 |
| 40%-50% | 2.0 |
| 50%-60% | 1.7 |
| 60%-70% | 1.4 |
| 70%-80% | 1.2 |
| 80%-100% | 0.33 |

For details about test results of Examples 1 to 20 and Comparative Examples 1 and 2, refer to Table 3 and Table 5.

**Table 2: Preparation parameters**

| Sequence number | Coke raw material | | | Precursor | | Granulated product | | Artificial graphite obtained through graphitization | | Coating | |
|---|---|---|---|---|---|---|---|---|---|---|---|
| | Dᵥ50 (µm) | Dᵥ99 (µm) | C₁ (%) | Dᵥ50 (µm) | Dᵥ99 (µm) | Dᵥ50 (µm) | Dᵥ99 (µm) | Dᵥ50 (µm) | Dᵥ99 (µm) | C₃ (%) | C₃×carbon residue rate (%) |
| Example 1 | 11.8 | 20.1 | 7.87 | 13.0 | 21.3 | 13.7 | 21.9 | 12.2 | 22.9 | 3.00 | 2.10 |
| Example 2 | 11.2 | 18.7 | 7.15 | 12.2 | 19.9 | 12.9 | 20.1 | 11.4 | 21.8 | 3.30 | 2.31 |
| Example 3 | 9.7 | 17.6 | 7.56 | 11.3 | 18.9 | 11.8 | 19.0 | 10.2 | 20.8 | 3.00 | 2.10 |
| Example 4 | 8.2 | 17.5 | 7.43 | 9.8 | 18.2 | 10.5 | 19.7 | 9.3 | 20.0 | 3.50 | 2.45 |
| Example 5 | 7.5 | 17.1 | 7.00 | 9.3 | 17.9 | 10.1 | 19.2 | 8.8 | 19.6 | 3.00 | 2.10 |
| Example 6 | 7.3 | 16.4 | 7.88 | 8.9 | 17.0 | 9.7 | 18.3 | 8.5 | 18.5 | 3.80 | 2.66 |
| Example 7 | 7.1 | 15.9 | 6.67 | 8.5 | 16.4 | 9.2 | 17.1 | 7.5 | 17.5 | 2.20 | 1.53 |
| Comparative Example 1 | 12.3 | 30.0 | 6.76 | 13.2 | 34.0 | 14.2 | 38.3 | 12.7 | 38.6 | 3.00 | 2.10 |
| Comparative Example 2 | 15.1 | 36.4 | 6.23 | 15.1 | 38.1 | 16.3 | 47.6 | 14.8 | 48.1 | 3.20 | 2.24 |

**Table 3: Test results**

| Sequence number | Negative-electrode active material | | | Battery performance | |
|---|---|---|---|---|---|
| | Dᵥ99 (µm) | Dᵥ50 (µm) | Gram capacity (mAh/g) | Fast charging performance (min) | Cycling performance (number of cycles) |
| Example 1 | 22.3 | 14.5 | 355.2 | 20.8 | 1950 |
| Example 2 | 21.4 | 13.2 | 354.3 | 18.5 | 2320 |
| Example 3 | 20.3 | 12.4 | 353.6 | 17.4 | 2530 |
| Example 4 | 18.9 | 11.4 | 351.3 | 20.2 | 2005 |
| Example 5 | 18.4 | 10.5 | 350.7 | 20.4 | 1930 |
| Example 6 | 17.8 | 10.2 | 350.5 | 20.6 | 1830 |
| Example 7 | 16.3 | 8.3 | 348.7 | 18.8 | 2050 |
| Comparative Example 1 | 36.0 | 12.0 | 353.2 | 23.7 | 907 |
| Comparative Example 2 | 45.2 | 17.5 | 359.4 | 28.5 | 1270 |

As can be seen from the results in Table 3, the negative-electrode active material of this application includes the core and the coating layer covering the surface of the core, the core includes artificial graphite, the coating layer includes amorphous carbon, and the negative-electrode active material satisfies Dᵥ99 ≤ 24µm and 8µm ≤ Dᵥ50 ≤ 15µm, thereby improving the fast-charging capability and cycling performance of the secondary battery using the negative-electrode active material under the condition of higher energy density.

In Comparative Example 1, both the fast-charging capability and the cycling performance of the secondary battery are relatively poor because the foregoing conditions are not satisfied.

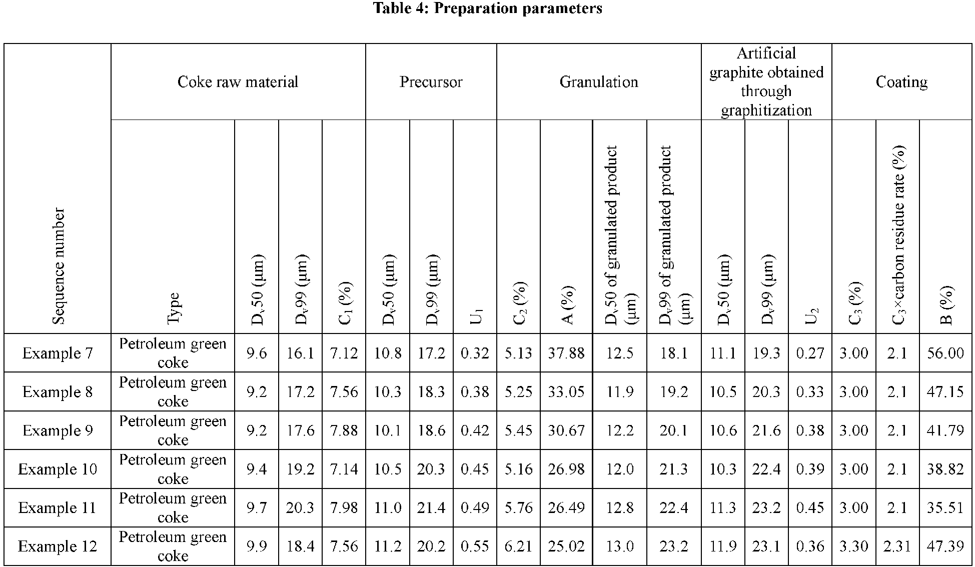

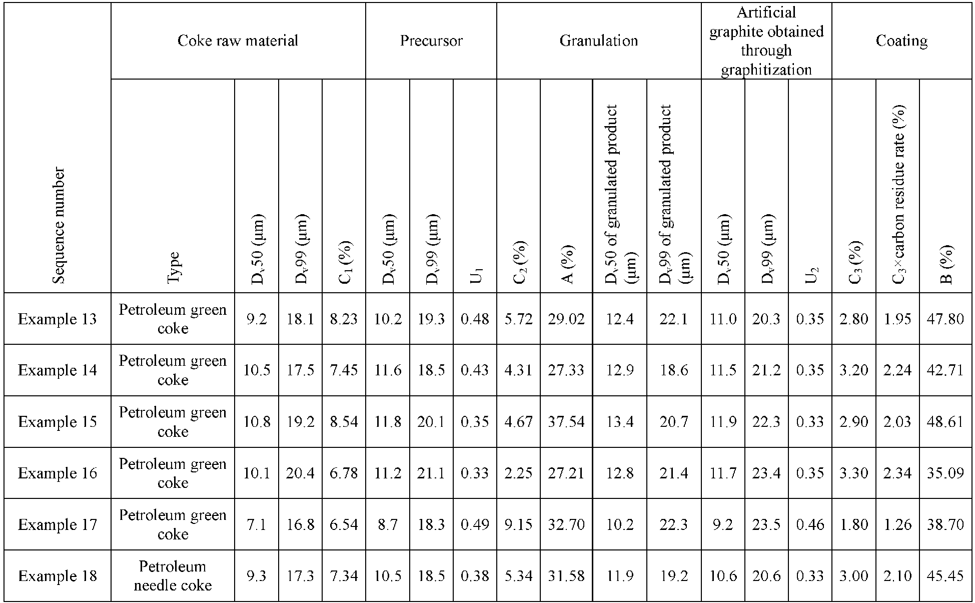

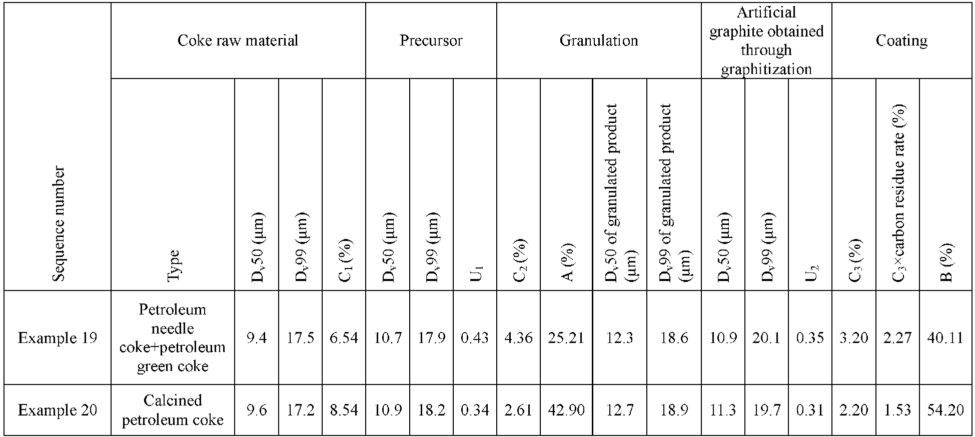

In Table 4, A=(C₁+C₂)/U₁ × 100%; and B=(C₁+C₂+C₃)/U₂ × 100%.

**Table 5: Test results**

| Sequence number | Negative-electrode active material | | | | | | Battery performance | |
|---|---|---|---|---|---|---|---|---|
| | Dᵥ99 (µm) | Dᵥ50 (µm) | Particle size uniformity | Particle size specific surface area (m²/g) | Quantity proportion of the secondary particles | Gram capacity (mAh/g) | Fast charging performance(min) | Cycling performance (number of cycles) |
| Example 7 | 19.2 | 12.3 | 0.25 | 0.62 | 80% | 353.6 | 21.0 | 1980 |
| Example 8 | 20.1 | 12.6 | 0.32 | 0.53 | 80% | 353.4 | 17.3 | 2530 |
| Example 9 | 21.3 | 12.1 | 0.35 | 0.5 | 80% | 353.8 | 18.5 | 2320 |
| Example 10 | 22.3 | 11.3 | 0.38 | 0.47 | 80% | 352.6 | 20.2 | 2005 |
| Example 11 | 23.1 | 11.2 | 0.42 | 0.45 | 80% | 352.4 | 20.6 | 1830 |
| Example 12 | 23.6 | 14.1 | 0.34 | 0.68 | 90% | 353.2 | 21.5 | 2145 |
| Example 13 | 22.2 | 13.5 | 0.34 | 0.62 | 85% | 353.7 | 20.7 | 2217 |
| Example 14 | 21.3 | 12.2 | 0.34 | 0.51 | 75% | 353.3 | 18.9 | 2401 |
| Example 15 | 22.2 | 11.6 | 0.34 | 0.46 | 73% | 352.3 | 18.7 | 2524 |
| Example 16 | 23.1 | 12.3 | 0.34 | 0.42 | 72% | 352.4 | 19.5 | 2430 |
| Example 17 | 23.2 | 13.2 | 0.4 | 0.71 | 100% | 352.8 | 18.5 | 1901 |
| Example 18 | 20.3 | 12.6 | 0.32 | 0.53 | 80% | 353.3 | 17.4 | 2530 |
| Example 19 | 20.4 | 12.3 | 0.34 | 0.51 | 75% | 352.1 | 18.9 | 2401 |
| Example 20 | 20.5 | 11.3 | 0.3 | 0.48 | 60% | 351.7 | 20.6 | 2178 |

It can be seen from the results of Examples 7 to 11 that the negative-electrode active material with the particle size uniformity (Uniformity) further being within an appropriate range can further improve the fast-charging capability and cycling performance of the battery.

It can be seen from the results of Examples 12 to 20 that the negative-electrode active material with the particle size specific surface area or the quantity proportion of the secondary particles further being within an appropriate range can further improve the fast-charging capability and cycling performance of the battery.

## Claims

1. A negative-electrode active material, comprising:
a core; and
a coating layer covering at least part of a surface of the core, wherein the core comprises artificial graphite, the coating layer comprises amorphous carbon; wherein:
a volume-based particle size distribution of the negative-electrode active material, when measured by using a laser diffraction particle size analysis method, satisfies Dᵥ99 ≤ 24µm; and
a volume-based median particle size Dᵥ50 of the negative-electrode active material, when measured by using a laser diffraction particle size analysis method, satisfies 8µm ≤ Dᵥ50 ≤ 15µm,
wherein Dᵥ99 is a particle size corresponding to a cumulative volume distribution percentage of the negative-electrode active material reaching 99%; and Dᵥ50 is a particle size corresponding to a cumulative volume distribution percentage of the negative-electrode active material reaching 50%;
and
wherein the negative-electrode active material comprises secondary particles, and a quantity proportion of the secondary particles in the negative-electrode active material is ≥ 50%.

2. The negative-electrode active material according to claim 1, wherein:
the volume-based median particle size Dᵥ50 satisfies: 9µm ≤ Dᵥ50 ≤ 13µm, optionally, 11µm ≤ Dᵥ50 ≤ 13µm, and/or
a particle size specific surface area of the negative-electrode active material when measured by using a laser diffraction particle size analysis method is 0.4m²/g-0.75m²/g, optionally, 0.5m²/g-0.65m²/g.

3. The negative-electrode active material according to any one of claims 1 to 2, wherein the quantity proportion of the secondary particles in the negative-electrode active material is 70%-95%.

4. The negative-electrode active material according to any one of claims 1 to 3, wherein the negative-electrode active material satisfies: 0.6 ≤ (Dᵥ90-Dᵥ10)/Dᵥ50 ≤ 1.8, optionally, 0.8 ≤ (Dᵥ90-Dᵥ10) /Dᵥ50 ≤ 1.4; wherein Dᵥ90 is a particle size corresponding to a cumulative volume distribution percentage of the negative-electrode active material reaching 90%, and Dᵥ10 is a particle size corresponding to a cumulative volume distribution percentage of the negative-electrode active material reaching 10%.

5. The negative-electrode active material according to any one of claims 1 to 4, wherein the volume-based particle size distribution Dᵥ90 of the negative-electrode active material is 13µm-18µm, optionally, 14µm-17µm, and/or wherein the volume-based particle size distribution Dᵥ10 of the negative-electrode active material is 5µm-10µm, optionally, 6µm-8µm.

6. The negative-electrode active material according to any one of claims 1 to 5, wherein the negative-electrode active material further satisfies one or more of the following (1) to (4):
(1) a graphitization degree of the negative-electrode active material is 91.0%-96.0%, optionally, 94.0%-95.0%;
(2) a gram capacity of the negative-electrode active material is 345mAh/g-360mAh/g, optionally, 350mAh/g-358mAh/g;
(3) a tap density of the negative-electrode active material is 0.9g/cm³-1.3g/cm³, optionally, 1.0g/cm³-1.1g/cm³; and
(4) a powder compacted density of the negative-electrode active material under a pressure of 2kN is 1.55g/cm³-1.67g/cm³, optionally, 1.60g/cm³-1.65g/cm³.

7. A preparation method of a negative-electrode active material, comprising the following steps:
(A) providing a core, wherein the core comprises artificial graphite; and
(B) coating the core to form a coating layer on at least part of a surface of the core, so as to obtain a negative-electrode active material, wherein the coating layer comprises amorphous carbon, and the negative-electrode active material satisfies Dᵥ99 ≤ 24µm and 8µm ≤ Dᵥ50 ≤ 15µm; wherein Dᵥ99 is a particle size corresponding to a cumulative volume distribution percentage of the negative-electrode active material reaching 99%, when measured by using a laser diffraction particle size analysis method; and Dᵥ50 is a particle size corresponding to a cumulative volume distribution percentage of the negative-electrode active material reaching 50%, when measured by using a laser diffraction particle size analysis method;
wherein the negative-electrode active material comprises secondary particles, and a quantity proportion of the secondary particles in the negative-electrode active material is ≥ 50%.

8. The preparation method according to claim 7, wherein, in the step (A), preparation of the artificial graphite comprises:
(a) providing a coke raw material;
(b) performing shaping processing on the coke raw material to obtain a precursor;
(c) granulating the precursor to obtain a granulated product; and
(d) graphitizing the granulated product to obtain artificial graphite, wherein a volume-based median particle size Dᵥ50 of the artificial graphite is 6µm-14µm.

9. The preparation method according to claim 8, wherein a volume-based median particle size Dᵥ50 of the granulated product is 9µm-15µm, and/or
a volume-based median particle size Dᵥ50 of the precursor is 8µm-13µm, and/or
a volume-based median particle size Dᵥ50 of the coke raw material is 7µm-12µm, and a volume-based particle size distribution Dᵥ99 is 15µm-21µm.

10. The preparation method according to any one of claims 8 to 9, wherein the volatile content C₁ of the coke raw material satisfies 1% ≤ C₁ ≤ 12%, optionally, 5% ≤ C₁ ≤ 9%, and/or
the coke raw material comprises one or more of petroleum-based non-needle coke and petroleum-based needle coke, and optionally, the coke raw material comprises petroleum green coke.

11. The preparation method according to any one of claims 7 to 10, wherein the step (B) comprises:
(e) coating the core with an organic carbon source and performing heat treatment to form an amorphous carbon coating layer on at least part of the surface of the core, so as to obtain the negative-electrode active material.

12. The preparation method according to any one of claims 7 to 10, wherein the step (B) comprises: coating the core with an organic carbon source and performing heat treatment to form an amorphous carbon coating layer on at least part of the surface of the core, so as to obtain the negative-electrode active material;
wherein an amount of the organic carbon source added in the step (e) is denoted by C₃; and the preparation method satisfies: 1.2% ≤ C₃ × carbon residue rate ≤ 2.5%.

13. The preparation method according to any one of claims 1 to 12, wherein the volume-based particle size distribution of the negative-electrode active material, when measured by using a laser diffraction particle size analysis method, satisfies 18µm ≤ Dᵥ99 ≤ 24µm.

14. A secondary battery, comprising a negative-electrode plate, wherein the negative-electrode plate comprises the negative-electrode active material according to any one of claims 1 to 6 or the negative-electrode active material obtained according to the preparation method according to any one of claims 7 to 13.

15. A battery module, comprising the secondary battery according to claim 14.

## Patentansprüche

1. Negativelektrodenaktivmaterial, umfassend:
einen Kern; und
eine Beschichtungsschicht, die mindestens einen Teil der Oberfläche des Kerns bedeckt, wobei der Kern künstlichen Graphit umfasst, die Beschichtungsschicht amorphen Kohlenstoff umfasst; wobei:
eine volumenbasierte Partikelgrößenverteilung des Negativelektrodenaktivmaterials, wenn es unter Verwendung eines Partikelgrößenanalyseverfahrens mittels Laserbeugung gemessen wird, Dᵥ99 ≤ 24 µm erfüllt; und
eine volumenbasierte mittlere Partikelgröße Dᵥ50 des Negativelektrodenaktivmaterials, wenn es unter Verwendung eines Partikelgrößenanalyseverfahrens mittels Laserbeugung gemessen wird, 8 µm ≤ Dᵥ50 ≤ 15 µm erfüllt,
wobei Dᵥ99 eine Partikelgröße ist, die einem kumulativen Volumenverteilungsprozentsatzes des Negativelektrodenaktivmaterials von 99 % entspricht; und Dᵥ50 eine Partikelgröße ist, die einem kumulativen Volumenverteilungsprozentsatz des Negativelektrodenaktivmaterials von 50 % entspricht; und
wobei das Negativelektrodenaktivmaterial Sekundärpartikel umfasst und ein Mengenanteil der Sekundärpartikel im Negativelektrodenaktivmaterial ≥ 50 % beträgt.

2. Negativelektrodenaktivmaterial nach Anspruch 1, wobei:
die volumenbasierte mittlere Partikelgröße Dᵥ50 Folgendes erfüllt: 9 µm ≤ Dᵥ50 ≤ 13 µm, optional 11 µm ≤ Dᵥ50 ≤ 13 µm, und/oder
ein partikelgrößenspezifischer Oberflächenbereich des Negativelektrodenaktivmaterials, wenn
es unter Verwendung eines Partikelgrößenanalyseverfahrens mittels Laserbeugung gemessen wird, 0,4 m²/g bis 0,75 m²/g beträgt, optional 0,5 m²/g bis 0,65 m²/g.

3. Negativelektrodenaktivmaterial nach einem der Ansprüche 1 bis 2, wobei der Mengenanteil der Sekundärpartikel im Negativelektrodenaktivmaterial 70 % bis 95 % beträgt.

4. Negativelektrodenaktivmaterial nach einem der Ansprüche 1 bis 3, wobei das Negativelektrodenaktivmaterial Folgendes erfüllt: 0,6 ≤ (Dᵥ90 - Dᵥ10)/Dᵥ50 ≤ 1,8, optional 0,8 ≤ (Dᵥ90 - Dᵥ10) /Dᵥ50 ≤ 1,4; wobei Dᵥ90 eine Partikelgröße ist, die einem kumulativen Volumenverteilungsprozentsatzes des Negativelektrodenaktivmaterials von 90 % entspricht; und Dᵥ10 eine Partikelgröße ist, die einem kumulativen Volumenverteilungsprozentsatz des Negativelektrodenaktivmaterials von 10 % entspricht.

5. Negativelektrodenaktivmaterial nach einem der Ansprüche 1 bis 4, wobei die volumenbasierte Partikelgrößenverteilung Dᵥ90 des Negativelektrodenaktivmaterials 13 µm bis 18 µm, optional 14 µm bis 17 µm beträgt, und/oder wobei die volumenbasierte Partikelgrößenverteilung Dᵥ10 des Negativelektrodenaktivmaterials 5 µm bis 10 µm, optional 6 µm bis 8 µm, beträgt.

6. Negativelektrodenaktivmaterial nach einem der Ansprüche 1 bis 5, wobei das Negativelektrodenaktivmaterial ferner eine oder mehrere der Folgenden (1) bis (4) erfüllt:
(1) ein Graphitisierungsgrad des Negativelektrodenaktivmaterials beträgt 91,0 % bis 96,0 %, optional 94,0 % bis 95,0 %;
(2) eine Grammkapazität des Negativelektrodenaktivmaterials beträgt 345 mAh/g bis 360 mAh/g, optional 350 mAh/g bis 358 mAh/g;
(3) eine Klopfdichte des Negativelektrodenaktivmaterials beträgt 0,9 g/cm³ bis 1,3 g/cm³, optional 1,0 g/cm³ bis 1,1 g/cm³; und
(4) eine Pulververstampfdichte des Negativelektrodenaktivmaterials unter einem Druck von 2 kN beträgt 1,55 g/cm³ bis 1,67 g/cm³, optional 1,60 g/cm³ bis 1,65 g/cm³.

7. Herstellungsverfahren für ein Negativelektrodenaktivmaterial, umfassend die folgenden Schritte:
(A) Bereitstellen eines Kerns, wobei der Kern künstlichen Graphit umfasst; und
(B) Beschichten des Kerns, um eine Beschichtungsschicht auf mindestens einem Teil der Oberfläche des Kerns zu bilden, um so ein Negativelektrodenaktivmaterial zu erhalten, wobei die Beschichtungsschicht amorphen Kohlenstoff umfasst und das Negativelektrodenaktivmaterial Dᵥ99 ≤ 24 µm und 8 µm ≤ Dᵥ50 ≤ 15 µm erfüllt; wobei Dᵥ99 eine Partikelgröße ist, die einem kumulativen Volumenverteilungsprozentsatz des Negativelektrodenaktivmaterials von 99 % entspricht, wenn es unter Verwendung eines Partikelgrößenanalyseverfahrens mittels Laserbeugung gemessen wird; und Dᵥ50 eine Partikelgröße ist, die einem kumulativen Volumenverteilungsprozentsatz des Negativelektrodenaktivmaterials von 50 % entspricht, wenn es unter Verwendung eines Partikelgrößenanalyseverfahrens mittels Laserbeugung gemessen wird;
wobei das Negativelektrodenaktivmaterial Sekundärpartikel umfasst und ein Mengenanteil der Sekundärpartikel im Negativelektrodenaktivmaterial ≥ 50 % beträgt.

8. Herstellungsverfahren nach Anspruch 7, wobei im Schritt (A) die Herstellung des künstlichen Graphits Folgendes umfasst:
(a) Bereitstellen eines Koks-Rohmaterials;
(b) Durchführen der Formgebung des Koks-Rohmaterials, um einen Vorläufer zu erhalten;
(c) Granulieren des Vorläufers, um ein granuliertes Produkt zu erhalten; und
(d) Graphitisieren des granulierten Produkts, um künstlichen Graphit zu erhalten, wobei eine volumenbasierte mittlere Partikelgröße Dᵥ50 des künstlichen Graphits 6 µm bis 14 µm beträgt.

9. Herstellungsverfahren nach Anspruch 8, wobei eine volumenbasierte mittlere Partikelgröße Dᵥ50 des granulierten Produkts 9 µm bis 15 µm beträgt, und/oder
eine volumenbasierte mittlere Partikelgröße Dᵥ50 des Vorläufers 8 µm bis 13 µm beträgt und/oder
eine volumenbasierte mittlere Partikelgröße Dᵥ50 des Koks-Rohmaterials 7 µm bis 12 µm beträgt und eine volumenbasierte Partikelgrößenverteilung Dᵥ99 15 µm bis 21 µm beträgt.

10. Herstellungsverfahren nach einem der Ansprüche 8 bis 9, wobei der flüchtige Gehalt C₁ des Koks-Rohmaterials 1 % ≤ C₁ ≤ 12 %, optional 5 % ≤ C₁ ≤ 9 %, erfüllt, und/oder
das Koks-Rohmaterial ein oder mehrere von erdölbasiertem Nicht-Nadelkoks und erdölbasiertem Nadelkoks umfasst, und optional das Koks-Rohmaterial Erdölgrünkoks umfasst.

11. Herstellungsverfahren nach einem der Ansprüche 7 bis 10, wobei der Schritt (B) Folgendes umfasst:
(e) Beschichten des Kerns mit einer organischen Kohlenstoffquelle und Durchführen einer Wärmebehandlung, um eine amorphe Kohlenstoffbeschichtungsschicht auf mindestens einem Teil der Oberfläche des Kerns zu bilden, um so das Negativelektrodenaktivmaterial zu erhalten.

12. Herstellungsverfahren nach einem der Ansprüche 7 bis 10, wobei der Schritt (B) Folgendes umfasst: Beschichten des Kerns mit einer organischen Kohlenstoffquelle und Durchführen einer Wärmebehandlung, um eine amorphe Kohlenstoffbeschichtungsschicht auf mindestens einem Teil der Oberfläche des Kerns zu bilden, um so das Negativelektrodenaktivmaterial zu erhalten;
wobei eine Menge der im Schritt (e) zugesetzten organischen Kohlenstoffquelle mit C₃ bezeichnet wird; und das Herstellungsverfahren Folgendes erfüllt: 1,2 % ≤ C₃ × Kohlenstoffrückstandsrate ≤ 2,5 %.

13. Herstellungsverfahren nach einem der Ansprüche 1 bis 12, wobei die volumenbasierte Partikelgrößenverteilung des Negativelektrodenaktivmaterials, wenn es unter Verwendung eines Partikelgrößenanalyseverfahrens mittels Laserbeugung gemessen wird, 18 µm ≤ Dᵥ99 ≤ 24 µm erfüllt.

14. Sekundärbatterie, umfassend eine Negativelektrodenplatte, wobei die Negativelektrodenplatte das Negativelektrodenaktivmaterial nach einem der Ansprüche 1 bis 6 oder das Negativelektrodenaktivmaterial umfasst, das nach dem Herstellungsverfahren nach einem der Ansprüche 7 bis 13 erhalten wird.

15. Batteriemodul, umfassend die Sekundärbatterie nach Anspruch 14.

## Revendications

1. Matériau actif d'électrode négative, comprenant :
un cœur ; et
une couche de revêtement couvrant au moins une partie de la surface du cœur, le cœur comprenant du graphite artificiel, la couche de revêtement comprenant du carbone amorphe ; dans lequel :
une distribution de taille de particules basée sur le volume du matériau actif d'électrode négative, lorsqu'elle est mesurée par une méthode d'analyse de taille de particules par diffraction laser, satisfait Dᵥ99 ≤ 24 µm ; et
une taille de particules médiane basée sur le volume Dᵥ50 du matériau actif d'électrode négative, lorsqu'elle est mesurée par une méthode d'analyse de taille de particules par diffraction laser, satisfait 8 µm ≤ Dᵥ50 ≤ 15 µm,
la Dᵥ99 étant une taille de particules correspondant à un pourcentage de distribution de volume cumulatif du matériau actif d'électrode négative atteignant 99 % ; et la Dᵥ50 étant une taille de particules correspondant à un pourcentage de distribution de volume cumulatif du matériau actif d'électrode négative atteignant 50 % ; et
le matériau actif d'électrode négative comprenant des particules secondaires, et une proportion quantitative des particules secondaires dans le matériau actif d'électrode négative étant ≥ 50 %.

2. Matériau actif d'électrode négative selon la revendication 1, dans lequel :
la taille de particules médiane basée sur le volume Dᵥ50 satisfait : 9 µm ≤ Dᵥ50 ≤ 13 µm, éventuellement, 11 µm ≤ Dᵥ50 ≤ 13 µm, et/ou
une aire de surface spécifique par taille de particules du matériau actif d'électrode négative lorsqu'elle est mesurée par une méthode d'analyse de taille de particules par diffraction laser est de 0,4 m²/g à 0,75 m²/g, éventuellement, de 0,5 m²/g à 0,65 m²/g.

3. Matériau actif d'électrode négative selon l'une quelconque des revendications 1 à 2, dans lequel la proportion quantitative des particules secondaires dans le matériau actif d'électrode négative est de 70 % à 95 %.

4. Matériau actif d'électrode négative selon l'une quelconque des revendications 1 à 3, dans lequel le matériau actif d'électrode négative satisfait : 0,6 ≤ (Dᵥ90-Dᵥ10)/Dᵥ50 ≤ 1,8, éventuellement, 0,8 ≤ (Dᵥ90-Dᵥ10)/Dᵥ50 ≤ 1.4 ; la Dᵥ90 étant une taille de particules correspondant à un pourcentage de distribution de volume cumulatif du matériau actif d'électrode négative atteignant 90 %, et la Dᵥ10 étant une taille de particules correspondant à un pourcentage de distribution de volume cumulatif du matériau actif d'électrode négative atteignant 10 %.

5. Matériau actif d'électrode négative selon l'une quelconque des revendications 1 à 4, dans lequel la distribution de taille de particules basée sur le volume Dᵥ90 du matériau actif d'électrode négative est de 13 µm à 18 µm, éventuellement, de 14 µm à 17 µm, et/ou dans lequel la distribution de taille de particules basée sur le volume Dᵥ10 du matériau actif d'électrode négative est de 5 µm à 10 µm, éventuellement, de 6 µm à 8 µm.

6. Matériau actif d'électrode négative selon l'une quelconque des revendications 1 à 5, le matériau actif d'électrode négative satisfaisant en outre une ou plusieurs des conditions (1) à (4) suivantes :
(1) un degré de graphitisation du matériau actif d'électrode négative est de 91,0 % à 96,0 %, éventuellement, de 94,0 % à 95,0 % ;
(2) une capacité massique du matériau actif d'électrode négative est de 345 mAh/g à 360 mAh/g, éventuellement, de 350 mAh/g à 358 mAh/g ;
(3) une masse volumique après tassement du matériau actif d'électrode négative est de 0,9 g/cm³ à 1,3 g/cm³, éventuellement, de 1,0 g/cm³ à 1,1 g/cm³ ; et
(3) une masse volumique après compactage de la poudre du matériau actif d'électrode négative sous une pression de 2 kN est de 1,55 g/cm³ à 1,67 g/cm³, éventuellement, de 1,60 g/cm³ à 1,65 g/cm³.

7. Procédé de préparation d'un matériau actif d'électrode négative, comprenant les étapes suivantes consistant à :
(A) fournir un cœur, le cœur comprenant du graphite artificiel ; et
(B) revêtir le cœur pour former une couche de revêtement sur au moins une partie d'une surface du cœur, de sorte à obtenir un matériau actif d'électrode négative, la couche de revêtement comprenant du carbone amorphe, et le matériau actif d'électrode négative satisfaisant Dᵥ99 ≤ 24 µm et 8 µm ≤ Dᵥ50 ≤ 15 µm ; la Dᵥ99 étant une taille de particules correspondant à un pourcentage de distribution de volume cumulatif du matériau actif d'électrode négative atteignant 99 % lorsqu'elle est mesurée à l'aide d'une méthode d'analyse de taille de particules par diffraction laser ; et la Dᵥ50 étant une taille de particules correspondant à un pourcentage de distribution de volume cumulatif du matériau actif d'électrode négative atteignant 50 %, lorsqu'elle est mesurée à l'aide d'une méthode d'analyse de taille de particules par diffraction laser ;
le matériau actif d'électrode négative comprenant des particules secondaires, et une proportion quantitative des particules secondaires dans le matériau actif d'électrode négative étant ≥ 50 %.

8. Procédé de préparation selon la revendication 7, dans lequel, dans l'étape (A), la préparation du graphite artificiel comprend les étapes consistant à :
(a) fournir une matière première de coke ;
(b) réaliser un traitement de mise en forme sur la matière première de coke pour obtenir un précurseur ;
(c) granuler le précurseur pour obtenir un produit granulé ; et
(d) graphitiser le produit granulé pour obtenir du graphite artificiel, une taille de particules médiane basée sur le volume Dᵥ50 du graphite artificiel étant de 6 µm à 14 µm.

9. Procédé de préparation selon la revendication 8, dans lequel une taille de particules médiane basée sur le volume Dᵥ50 du produit granulé est de 9 µm à 15 µm, et/ou
une taille de particules médiane basée sur le volume Dᵥ50 du précurseur est de 8 µm à 13 µm, et/ou
une taille de particules médiane basée sur le volume Dᵥ50 de la matière première de coke est de 7 µm à 12 µm, et une distribution de taille de particules basée sur le volume Dᵥ99 est de 15 µm à 21 µm.

10. Procédé de préparation selon l'une quelconque des revendications 8 à 9, dans lequel la teneur en composés volatils C₁ de la matière première de coke satisfait 1 % ≤ C₁ ≤ 12 %, éventuellement, 5 % ≤ C₁ ≤ 9 %, et/ou
la matière première de coke comprend un ou plusieurs d'un coke non en aiguille à base de pétrole et d'un coke en aiguilles à base de pétrole, et éventuellement, la matière première de coke comprend du coke brut de pétrole.

11. Procédé de préparation selon l'une quelconque des revendications 7 à 10, dans lequel l'étape (B) comprend l'étape suivante consistant à :
(e) revêtir le cœur avec une source de carbone organique et effectuer un traitement thermique pour former une couche de revêtement de carbone amorphe sur au moins une partie de la surface du cœur, de sorte à obtenir le matériau actif d'électrode négative.

12. Procédé de préparation selon l'une quelconque des revendications 7 à 10, dans lequel l'étape (B) comprend l'étape suivante consistant à : revêtir le cœur avec une source de carbone organique et effectuer un traitement thermique pour former une couche de revêtement de carbone amorphe sur au moins une partie de la surface du cœur, de sorte à obtenir le matériau actif d'électrode négative ;
une quantité de la source de carbone organique ajoutée à l'étape (e) est notée C₃ ; et le procédé de préparation satisfait : 1,2 % ≤ C₃ × taux de résidu de carbone ≤ 2,5 %.

13. Procédé de préparation selon l'une quelconque des revendications 1 à 12, dans lequel la distribution de taille de particules basée sur le volume du matériau actif d'électrode négative, lorsqu'elle est mesurée par une méthode d'analyse de taille de particules par diffraction laser, satisfait 18 µm ≤ Dᵥ99 ≤ 24 µm.

14. Batterie rechargeable, comprenant une plaque d'électrode négative, la plaque d'électrode négative comprenant le matériau actif d'électrode négative selon l'une quelconque des revendications 1 à 6 ou le matériau actif d'électrode négative obtenu selon le procédé de préparation selon l'une quelconque des revendications 7 à 13.

15. Module batterie, comprenant la batterie rechargeable selon la revendication 14.
